# EUROPEAN PATENT APPLICATION

(11) **EP 4 693 967 A1**
(43) Date of publication of application: **11.02.2026**
(21) Application number: 24777993.7
(22) Date of filing: 26.03.2024
(51) Int. Cl.: H04L 1/00

(54) **METHOD AND APPARATUS USED IN NODE FOR WIRELESS COMMUNICATIONS**

(30) Priority: 29.03.2023 CN 202310323185
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2024/083727
(87) International publication number: WO 2024/199205

(57) **Abstract**

Disclosed in the present application are a method and apparatus used in a node for wireless communications. The method comprises: a first receiver receiving a first information block, wherein the first information block is used for indicating a first RS resource set, and the first RS resource set comprises one or more RS resources; and a first transmitter sending first channel information, wherein a first code is used for generating the first channel information, and a measurement for at least one RS resource in the first RS resource set is used for generating an input of the first code; a parameter group which is used by the first code belongs to a first parameter set or a second parameter set; and a first indication is used for indicating, from a target parameter set of the first parameter set and the second parameter set, the parameter group which is used by the first code, and the target parameter set is the first parameter set or the second parameter set. By means of the present application, the system implementation complexity is reduced, and the performance is improved.

## Description

### Technical Field

The present application relates to a transmission method and apparatus in a wireless communication system, in particular to a transmission method and apparatus for wireless signals in a wireless communication system supporting a cellular network.

### Background Art

In a traditional wireless communication, UE (User Equipment) report may comprise at least one of a variety of auxiliary information, such as CSI (Channel Status Information), auxiliary information related to beam management, and auxiliary information related to positioning, wherein the CSI comprises at least one of a CRI (CSI-RS Resource Indicator), an RI (Rank Indicator), a PMI (Precoding Matrix Indicator), or a CQI (Channel Quality Indicator). Network equipment selects appropriate transmission parameters for UE according to the UE report, such as a resident cell, an MCS (Modulation and Coding Scheme), a TPMI (Transmitted Precoding Matrix Indicator), and a TCI (Transmission Configuration Indication). In addition, the UE report may be used for optimizing network parameters, such as better cell coverage, and switching base stations on or off according to UE locations. As the number of antennas increases, traditional PMI feedback methods bring a large amount of redundant overhead. Therefore, in NR R (release) 18, the CSI compression based on AI (Artificial Intelligence) or ML (Machine Learning) was initiated.

### Summary of the Invention

The inventor has found through research that how to determine a parameter set used by a code used for generating channel information, as well as parameter groups in the parameter set, is a key issue.

In view of the above issue, the present application discloses a solution. It should be noted that although a large amount of embodiments of the present application are developed for AI/ML, the present application is also applicable to solutions based on, for example, linear channel reconstruction; in particular, considering that specific channel reconstruction algorithms may be non-standardized or implemented independently by hardware vendors. Further, using a unified solution of UE report can reduce the implementation complexity or improve the performance. In case of no conflict, embodiments and features in the embodiments in any node of the present application may be applied to any other node. In case of no conflict, the embodiments and features in the embodiments of the present application may be arbitrarily combined with each other.

As one embodiment, an interpretation of terminologies in the present application is made with reference to definitions of TS36 series of a specification protocol of 3GPP.

As one embodiment, the interpretation of the terminologies in the present application is made with reference to definitions of TS38 series of a specification protocol of 3GPP.

As one embodiment, the interpretation of the terminologies in the present application is made with reference to definitions of TS37 series of a specification protocol of 3GPP.

As one embodiment, the interpretation of the terminologies in the present application is made with reference to definitions of a specification protocol of the IEEE (Institute of Electrical and Electronics Engineers).

The present application discloses a method used in a first node for wireless communications, characterized by comprising:
receiving a first information block, the first information block being used for indicating a first RS resource set, and the first RS resource set comprising one or more RS resources; and
sending first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, the problem to be solved by the present application comprises: how to determine a parameter set which is used by a code used for generating channel information.

As one embodiment, the problem to be solved by the present application comprises: how to determine which parameter group in the parameter set is used by the code used for generating the channel information.

As one embodiment, benefits of the above method comprise: a coding method for generating the channel information is flexibly adjusted.

As one embodiment, the benefits of the above method comprise: more accurate channel information may be obtained by selecting an appropriate coding method, thereby improving the transmission reliability and increasing the system capacity.

As one embodiment, the benefits of the above method comprise: the complexity of system implementation is reduced.

As one embodiment, the benefits of the above method comprise: the system overhead of UE report is reduced.

According to one aspect of the present application, it is characterized by comprising:
receiving the first indication.

According to one aspect of the present application, it is characterized by comprising:
sending the first indication.

As one embodiment, the above method improves the system flexibility.

According to one aspect of the present application, it is characterized in that the first parameter set is obtained by training based on a first group of training datasets, and the second parameter set is obtained by training based on a second group of training datasets; and the first group of training datasets comprises one or more training datasets, and the second group of training datasets comprises one or more training datasets.

According to one aspect of the present application, it is characterized in that whether the target parameter set is the first parameter set or the second parameter set depends on the first RS resource set.

According to one aspect of the present application, it is characterized in that the first information block corresponds to a first CORESET pool or a second CORESET pool, and whether the target parameter set is the first parameter set or the second parameter set depends on whether the first information block corresponds to the first CORESET pool or the second CORESET pool.

According to one aspect of the present application, it is characterized by comprising:
receiving a first signaling, the first signaling being used for triggering the first channel information,
wherein a CORESET where a PDCCH occupied by the first signaling is located belongs to the first CORESET pool or the second CORESET pool; and whether the target parameter set is the first parameter set or the second parameter set depends on whether the CORESET where the PDCCH occupied by the first signaling is located belongs to the first CORESET pool or the second CORESET pool.

According to one aspect of the present application, it is characterized by comprising:
receiving a third information block,
wherein the third information block is used for indicating whether the target parameter set is the first parameter set or the second parameter set.

According to one aspect of the present application, it is characterized in that the training of at least one parameter group in the first parameter set and the second parameter set is performed at the first node.

According to one aspect of the present application, it is characterized in that the training of at least one parameter group in the first parameter set and the second parameter set is performed by a sender of the first information block.

The present application discloses a method used in a second node for wireless communications, characterized by comprising:
sending a first information block, the first information block being used for indicating a first RS resource set, and the first RS resource set comprising one or more RS resources; and
receiving first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

According to one aspect of the present application, it is characterized by comprising:
sending the first indication.

According to one aspect of the present application, it is characterized by comprising:
receiving the first indication.

According to one aspect of the present application, it is characterized in that the first parameter set is obtained by training based on a first group of training datasets, and the second parameter set is obtained by training based on a second group of training datasets; and the first group of training datasets comprises one or more training datasets, and the second group of training datasets comprises one or more training datasets.

According to one aspect of the present application, it is characterized in that whether the target parameter set is the first parameter set or the second parameter set depends on the first RS resource set.

According to one aspect of the present application, it is characterized in that the first information block corresponds to a first CORESET pool or a second CORESET pool, and whether the target parameter set is the first parameter set or the second parameter set depends on whether the first information block corresponds to the first CORESET pool or the second CORESET pool.

According to one aspect of the present application, it is characterized by comprising:
sending a first signaling, the first signaling being used for triggering the first channel information,
wherein a CORESET where a PDCCH occupied by the first signaling is located belongs to the first CORESET pool or the second CORESET pool; and whether the target parameter set is the first parameter set or the second parameter set depends on whether the CORESET where the PDCCH occupied by the first signaling is located belongs to the first CORESET pool or the second CORESET pool.

According to one aspect of the present application, it is characterized by comprising:
sending a third information block,
wherein the third information block is used for indicating whether the target parameter set is the first parameter set or the second parameter set.

According to one aspect of the present application, it is characterized in that the training of at least one parameter group in the first parameter set and the second parameter set is performed by a recipient of the first information block.

According to one aspect of the present application, it is characterized in that the training of at least one parameter group in the first parameter set and the second parameter set is performed at the second node.

The present application discloses a first node device for wireless communications, characterized by comprising:
a first receiver receiving a first information block, the first information block being used for indicating a first RS resource set, and the first RS resource set comprising one or more RS resources; and
a first transmitter sending first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

The present application discloses a second node device used for wireless communications, characterized by comprising:
a second transmitter sending a first information block, the first information block being used for indicating a first RS resource set, and the first RS resource set comprising one or more RS resources; and
a second receiver receiving first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, compared with the traditional solution, the present application has the following advantages:
- a coding method for generating channel information is flexibly adjusted;
- more accurate channel information may be obtained by selecting an appropriate coding method;
- the transmission reliability and the system capacity are improved;
- the complexity of system implementation is reduced; and
- the system overhead of UE report is reduced.

### Brief Description of the Drawings

Other features, purposes and advantages of the present application will become more apparent from reading the detailed description of the non-limiting embodiments made with reference to the following drawings:
FIG. 1 shows a flowchart of a first information block and first channel information according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of a radio transmission according to one embodiment of the present application;
FIGS. 6A-6B respectively show schematic diagrams of a first indication according to one embodiment of the present application;
FIG. 7 shows a schematic diagram of a first group of training datasets and a second group of training datasets according to one embodiment of the present application;
FIG. 8 shows a schematic diagram of a target parameter set depending on a first RS resource set according to one embodiment of the present application;
FIG. 9 shows a schematic diagram of a first information block corresponding to a first CORESET pool or a second CORESET pool according to one embodiment of the present application;
FIG. 10 shows a schematic diagram of a first signaling according to one embodiment of the present application;
FIG. 11 shows a schematic diagram of a third information block according to one embodiment of the present application;
FIGS. 12A-12B respectively show schematic diagrams of a performer of training of at least one parameter group in a first parameter set and a second parameter set according to one embodiment of the present application;
FIG. 13 shows a flowchart of a transmission of first channel information according to one embodiment of the present application;
FIG. 14 shows a schematic diagram of an artificial intelligence processing system according to one embodiment of the present application;
FIG. 15 shows a schematic diagram of one code according to one embodiment of the present application;
FIG. 16 shows a schematic diagram of a first function according to one embodiment of the present application;
FIG. 17 shows a schematic diagram of one decoding layer group according to one embodiment of the present application;
FIG. 18 shows a structural block diagram of a processing apparatus used in a first node device according to one embodiment of the present application; and
FIG. 19 shows a structural block diagram of a processing apparatus used in a second node device according to one embodiment of the present application.

### Detailed Description of Embodiments

The technical solution of the present application will be further described in detail below in conjunction with the drawings. It should be noted that, in case of no conflict, embodiments and features in the embodiments in the present application may be arbitrarily combined with each other.

### Embodiment 1

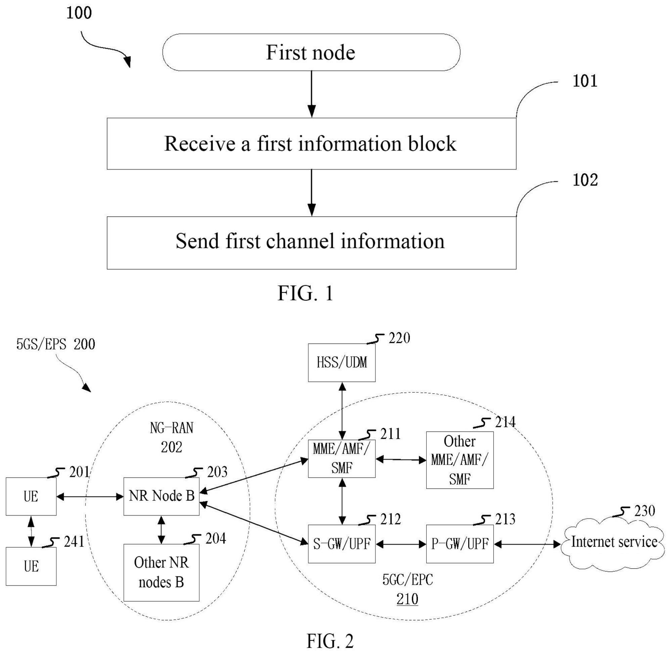

Embodiment 1 illustrates a flowchart of a first information block and first channel information according to one embodiment of the present application, as shown in FIG. 1. In 100 shown in FIG. 1, each box represents one step.

In Embodiment 1, a first node of the present application receives the first information block in step 101, wherein the first information block is used for indicating a first RS resource set, and the first RS resource set comprises one or more RS resources; and sends the first channel information in step 102, wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, the first information block is carried by a higher layer signaling.

As one embodiment, the first information block is carried by an RRC signaling.

As one embodiment, the first information block comprises part of or all fields in one RRC IE (Information Element).

As one embodiment, the first information block comprises part of fields in one RRC IE.

As one embodiment, the first information block comprises one RRC IE.

As one embodiment, the first information block comprises part of or all fields in one or more RRC IEs.

As one embodiment, the first information block comprises part of or all fields in an IE CSI-ReportConfig.

As one embodiment, the first information block comprises part of fields in the IE CSI-ReportConfig.

As one embodiment, the first information block comprises the IE CSI-ReportConfig.

As one embodiment, the first information block comprises part of or all fields in one RRC IE of which the name comprises a CSI-ReportConfig.

As one embodiment, the first information block comprises part of or all fields in one RRC IE of which the name comprises a ReportConfig.

As one embodiment, the first information block comprises part of or all fields in one RRC IE of which the name comprises CSI.

As one embodiment, the first information block comprises part of or all fields in one RRC IE of which the name comprises gen.

As one embodiment, the first information block comprises part of or all fields in one RRC IE of which the name comprises Gen.

As one embodiment, the first information block comprises a report configuration of the first channel information.

As one embodiment, the first information block comprises part of or all information in the report configuration of the first channel information.

As one embodiment, the report configuration of the first channel information comprises at least one of a report configuration identifier, a report type, a report quantity, an RS resource for a channel measurement, and an RS resource for an interference measurement.

As one sub-embodiment of the above embodiments, the report configuration identifier is used for identifying the report configuration of the first channel information.

As one embodiment, the first information block indicates one resource configuration, and the one resource configuration is used for configuring the first RS resource set.

As one sub-embodiment of the above embodiments, the one resource configuration is one CSI (Channel Status Information) resource configuration.

As one sub-embodiment of the above embodiments, the one resource configuration is one IE CSI-ResourceConfig.

As one sub-embodiment of the above embodiments, the one resource configuration is one IE, and the name of the one resource configuration comprises the CSI-ResourceConfig.

As one sub-embodiment of the above embodiments, the first information block comprises a resourcesForChannelMeasurement field, and the resourcesForChannelMeasurement field that is comprised in the first information block indicates the one resource configuration.

As one sub-embodiment of the above embodiments, the first information block comprises the resourcesForChannelMeasurement field, and the resourcesForChannelMeasurement field that is comprised in the first information block indicates an identifier of the one resource configuration.

As one sub-embodiment of the above embodiments, one resource configuration used for configuring the first RS resource set comprises an identifier or index of each RS resource in the first RS resource set.

As one sub-embodiment of the above embodiments, one resource configuration used for configuring the first RS resource set comprises the identifier of each RS resource in the first RS resource set.

As one sub-embodiment of the above embodiments, one resource configuration used for configuring the first RS resource set is used for configuring each RS resource in the first RS resource set.

As one sub-embodiment of the above embodiments, one resource configuration used for configuring the first RS resource set comprises configuration information of each RS resource in the first RS resource set.

As one embodiment, the first information block also comprises a second RS resource set, and the second RS resource set comprises one or more RS resources configured for the interference measurement.

As one embodiment, the second RS resource set comprises at least one of a CSI-IM (Channel State Information-Interference Measurement) resource or an NZP CSI-RS resource used for the interference measurement.

As one embodiment, the second RS resource set comprises at least the CSI-IM resource in the CSI-IM (Channel State Information-Interference Measurement) resource or the NZP (non-zero-power) CSI-RS resource used for the interference measurement.

As one embodiment, the second RS resource set comprises the CSI-IM resource.

As one embodiment, the second RS resource set comprises the CSI-IM resource and the NZP CSI-RS resource used for the interference measurement.

Typically, the CSI-IM is a zero-power reference signal.

As one embodiment, the first information block comprises two resource configurations, and the two resource configurations are respectively used for configuring the first RS resource set and the second RS resource set.

As one sub-embodiment of the above embodiments, the two resource configurations are respectively two CSI resource configurations.

As one sub-embodiment of the above embodiments, the two resource configurations are two IE CSI-ResourceConfigs.

As one sub-embodiment of the above embodiments, the first information block comprises the resourcesForChannelMeasurement field and a csi-IM-ResourcesForInterference field, and the resourcesForChannelMeasurement field and the csi-IM-ResourcesForInterference field that are comprised in the first information block respectively indicate the two resource configurations.

As one embodiment, the first information block comprises the csi-IM-ResourcesForInterference field, and the csi-IM-ResourcesForInterference field that is comprised in the first information block is used for indicating the second RS resource set.

As one embodiment, the first information block comprises three resource configurations, and the three resource configurations are respectively used for configuring CSI-IM resources in the first RS resource set and the second RS resource set and NZP CSI-RS resources in the second RS resource set that is configured for the interference measurement.

As one sub-embodiment of the above embodiments, the three resource configurations are respectively three CSI resource configurations.

As one sub-embodiment of the above embodiments, the three resource configurations are respectively three IE CSI-ResourceConfigs.

As one sub-embodiment of the above embodiments, the first information block comprises the resourcesForChannelMeasurement field, the csi-IM-ResourcesForInterference field, and an nzp-CSI-RS-ResourcesForInterference field, and the resourcesForChannelMeasurement field, the csi-IM-ResourcesForInterference field and the nzp-CSI-RS-ResourcesForInterference field that are comprised in the first information block respectively indicate the three resource configurations.

As one embodiment, the first information block comprises the csi-IM-ResourcesForInterference field and the nzp-CSI-RS-ResourcesForInterference field, and the csi-IM-ResourcesForInterference field and the nzp-CSI-RS-ResourcesForInterference field that are comprised in the first information block are used for indicating the second RS resource set.

As one embodiment, specific definitions of the IE CSI-ReportConfig, resourcesForChannelMeasurement, the csi-IM-ResourcesForInterference, the nzp-CSI-RS-ResourcesForInterference, and the IE CSI-ResourceConfig refer to Chapter 6.3.2 of 3GPP TS 38.331.

As one embodiment, configuration information of one RS resource is indicated by one or more IEs.

As one embodiment, the configuration information of one RS resource comprises at least one of an identifier, a period, an offset, an occupied time domain resource, an occupied frequency domain resource, an occupied code domain resource, a cyclic shift, an OCC (Orthogonal Cover Code), an occupied antenna port group, a sending sequence, and a TCI (Transmission Configuration Indicator) state of one RS resource.

As one embodiment, the first information block comprises the resourcesForChannelMeasurement field, and the resourcesForChannelMeasurement field that is comprised in the first information block is used for indicating the first RS resource set.

As one embodiment, the first information block also indicates the report type of the first channel information.

As one embodiment, the first information block comprises a reportConfigType (report configuration type) field; and the reportConfigType (report configuration type) field in the first information block indicates the report type of the first channel information.

As one embodiment, the report type comprises one or more of periodic, semi persistent on PUSCH, semi persistent on PUCCH, or aperiodic.

As one embodiment, the report type comprises one or more of the periodic, the semi persistent, or the aperiodic.

As one embodiment, at least one RS resource in the first RS resource set is used for the channel measurement of the first channel information.

As one embodiment, the first RS resource set is used for the channel measurement of the first channel information.

As one embodiment, the first RS resource set comprises one RS resource.

As one embodiment, the first RS resource set comprises a plurality of RS resources.

As one embodiment, the first RS resource set comprises one or more CSI-RS (Channel State Information-Reference Signal) resources.

As one embodiment, the first RS resource set comprises one or two of the CSI-RS resource or an SS/PBCH (Synchronization Signal/Physical Broadcast CHannel) block resource.

As one embodiment, any RS resource in the first RS resource set is the CSI-RS resource or the SS/PBCH block resource.

As one embodiment, the first RS resource set comprises one or two of the CSI-RS resource or an SSB resource.

As one embodiment, any RS resource in the first RS resource set is the CSI-RS resource or the SSB resource.

As one embodiment, any RS resource in the first RS resource set is the CSI-RS resource.

As one embodiment, the SSB refers to a Synchronization Signal Block.

As one embodiment, the SSB refers to a Synchronization Signal/Physical Broadcast Channel Block.

As one embodiment, the first information block comprises a higher layer parameter timeRestrictionForChannelMeasurements, and the higher layer parameter timeRestrictionForChannelMeasurements in the first information block is set to "configured".

As one embodiment, the first information block comprises the higher layer parameter timeRestrictionForChannelMeasurements, and the higher layer parameter timeRestrictionForChannelMeasurements in the first information block is set to "notConfigured".

As one embodiment, the first information block is used for configuring one aperiodic CSI report, and the first channel information is the one aperiodic CSI report configured by the first information block.

As one embodiment, the first information block is used for configuring one periodic or semi persistent CSI report, and the first channel information is a report instance of the periodic or semi persistent CSI report configured by the first information block.

As one embodiment, the first information block is used for configuring one periodic CSI report, and the first channel information is the report instance of the periodic CSI report configured by the first information block.

As one embodiment, the first information block is used for configuring one semi persistent CSI report, and the first channel information is the report instance of the semi persistent CSI report configured by the first information block.

As one embodiment, the first channel information is transmitted on a physical channel.

As one embodiment, the first channel information is transmitted on a PUSCH (Physical Uplink Shared Channel).

As one embodiment, the first channel information is transmitted on a PUCCH (Physical Uplink Control Channel).

As one embodiment, the first channel information is periodic or semi persistent.

As one embodiment, the first channel information is semi persistent, and the first channel information is activated by one MAC CE.

As one sub-embodiment of the above embodiments, the name of the MAC CE that activates the first channel information comprises SP CSI report on PUCCH Activation MAC CE.

As one sub-embodiment of the above embodiments, the name of the MAC CE that activates the first channel information comprises report on PUCCH Activation MAC CE.

As one embodiment, the first channel information is aperiodic, and the first channel information is triggered by one piece of DCI (Downlink Control Information).

As one embodiment, the first channel information is aperiodic, and the first channel information is triggered by one piece of DCI (Downlink Control Information); and the one piece of DCI comprises a CSI request field, the CSI request field of the one piece of DCI is used for indicating one trigger state, and the one trigger state is used for indicating the report configuration of the first channel information.

As one sub-embodiment of the above embodiments, the one trigger state indicates a report configuration identifier of the first channel information.

As one embodiment, the first information block also indicates the report quantity that is comprised in the first channel information.

As one embodiment, the first information block comprises a reportQuantity field, and the reportQuantity field in the first information block indicates the report quantity that is comprised in the report configuration of the first channel information.

As one embodiment, the first information block comprises the reportQuantity field, and the reportQuantity field in the first information block indicates the report quantity that is comprised in the first channel information.

As one embodiment, the report quantity that is comprised in the first channel information comprises a first type.

As one embodiment, the report quantity that is comprised in the first channel information comprises the first type or a PMI (Precoding Matrix Indicator).

As one embodiment, the report quantity in the report configuration in the first channel information comprises at least one of the first type, the PMI (Precoding Matrix Indicator), a CQI (Channel quality indicator), a CRI (CSI-RS Resource Indicator), an SS/PBCH block resource indicator (SSBRI), a layer indicator (LI), an RI (Rank Indicator), L1-RSRP (Layer 1 reference signal received power), or an L1-SINR (Layer 1 signal-to-noise and interference ratio).

As one embodiment, it comprises:
sending a first CQI,
wherein the report quantity in the report configuration of the first channel information comprises a CQI; and the measurement for at least one RS resource in the first RS resource set is used for generating first input channel information, the first input channel information being used for generating the first CQI, and the first input channel information being available only to the first node.

As one embodiment, it comprises:
sending the first CQI,
wherein the report quantity in the report configuration of the first channel information comprises the CQI; and the first channel information is used for generating the first CQI.

As one embodiment, the first type is different from any report quantity in the PMI, the CQI, the CRI, the SS/PBCH block resource indicator, the layer indicator, the RI, the L1-RSRP, or the L1-SINR.

As one embodiment, when the report quantity that is comprised in the first channel information comprises the PMI, the first channel information is used for indicating a codebook-based precoding matrix.

As one embodiment, when the report quantity that is comprised in the first channel information comprises the first type, the first channel information is used for determining a non-codebook-based precoding matrix.

Typically, the PMI is codebook-based.

As one embodiment, the first type is non-codebook-based.

As one embodiment, the first channel information comprises non-codebook-based channel information.

As one embodiment, the first channel information is non-codebook-based channel information.

As one embodiment, the meaning of an sentence "the PMI is codebook-based" comprises: the PMI is selected from a candidate codebook set.

As one embodiment, the meaning of the sentence "the PMI is codebook-based" comprises: the PMI indicates at least one codebook index.

As one embodiment, the meaning of the sentence "the PMI is codebook-based" comprises: the PMI indicates the codebook-based precoding matrix.

As one embodiment, the meaning of the sentence "the first type is non-codebook-based" comprises: the first type indicates non-codebook-based channel information.

As one embodiment, the meaning of the sentence "the first type is non-codebook-based" comprises: the first type indicates channel information generated based on artificial intelligence or machine learning.

As one embodiment, the meaning of the sentence "the first type is non-codebook-based" comprises: the first type indicates channel information generated based on the first code.

As one embodiment, the channel information generated based on the artificial intelligence or machine learning is non-codebook-based.

As one embodiment, the meaning of "the first channel information comprises non-codebook-based channel information" comprises: the channel information reconstructed by a sender of the first information block according to the first channel information is unavailable to the sender of the first channel information.

As one embodiment, the meaning of "the first channel information comprises non-codebook-based channel information" comprises: the first channel information does not comprise the codebook index.

As one embodiment, the meaning of "the first channel information comprises non-codebook-based channel information" comprises: the first channel information is not the PMI.

As one embodiment, the meaning of "the first channel information comprises non-codebook-based channel information" comprises: the first channel information is used for precoding, and the first channel information does not comprise the codebook index.

As one embodiment, the meaning of "the first channel information comprises non-codebook-based channel information" comprises: the first channel information is used for precoding, and the first channel information is not the PMI.

As one embodiment, the non-codebook-based channel information refers to information that cannot be indicated by the PMI or is not selected from the candidate codebook set.

As one embodiment, the non-codebook-based channel information is used for precoding.

As one embodiment, the non-codebook-based channel information is used for determining a channel parameter matrix.

As one embodiment, the non-codebook-based channel information is used for determining a phase position, or an amplitude, or a coefficient between at least two antenna ports.

As one embodiment, the non-codebook-based channel information is used for determining at least one eigenvector.

As one embodiment, the non-codebook-based channel information is used for determining at least one eigenvalue.

As one embodiment, the non-codebook-based channel information is used for determining at least one precoding matrix.

As one embodiment, the non-codebook-based channel information is used for determining at least one channel parameter matrix.

As one embodiment, the measurement for the first RS resource set is used for generating the first channel information.

As one embodiment, "a measurement for at least one RS resource in the first RS resource set is used for generating an input of the first code" means: the measurement for part of or all RS resources in the first RS resource set is used for generating the input of the first code.

As one embodiment, "a measurement for at least one RS resource in the first RS resource set is used for generating an input of the first code" means: the measurement for part of RS resources in the first RS resource set is used for generating the input of the first code.

As one embodiment, "a measurement for at least one RS resource in the first RS resource set is used for generating an input of the first code" means: the measurement for each RS resource in the first RS resource set is used for generating the input of the first code.

As one embodiment, "a measurement for at least one RS resource in the first RS resource set is used for generating an input of the first code" means: the measurement for one RS resource in the first RS resource set is used for generating the input of the first code.

As one embodiment, "a measurement for at least one RS resource in the first RS resource set is used for generating an input of the first code" means: the first RS resource set comprises only one RS resource, and the measurement for the first RS resource set is used for generating the input of the first code.

As one embodiment, the measurement for the first RS resource set is used for generating the first input channel information, and an output after inputting the first input channel information into the first code comprises the first channel information.

As one embodiment, the measurement for the first RS resource set is used for generating the first input channel information, and the output after inputting the first input channel information into the first code is used for generating the first channel information.

As one embodiment, the measurement for at least one RS resource in the first RS resource set is used for generating the first input channel information, and the output after inputting the first input channel information into the first code comprises the first channel information.

As one embodiment, the measurement for at least one RS resource in the first RS resource set is used for generating the first input channel information, and the output after inputting the first input channel information into the first code is used for generating the first channel information.

As one embodiment, the measurement for one RS resource in the first RS resource set is used for generating the first input channel information, and the output after inputting the first input channel information into the first code comprises the first channel information.

As one embodiment, the measurement for one RS resource in the first RS resource set is used for generating the first input channel information, and the output after inputting the first input channel information into the first code is used for generating the first channel information.

As one embodiment, each parameter group in the first parameter set is obtained by training.

As one embodiment, part of parameter groups in the first parameter set is obtained by training.

As one embodiment, each parameter group in the second parameter set is obtained by training.

As one embodiment, part of parameter groups in the second parameter set is obtained by training.

As one embodiment, the training of the first parameter set is based on the artificial intelligence or based on the machine learning.

As one embodiment, the training of the second parameter set is based on the artificial intelligence or based on the machine learning.

As one embodiment, the first parameter set corresponds to a first target RS resource set, and the second parameter set corresponds to a second target RS resource set.

As one embodiment, the measurement for the first target RS resource set is used for generating or obtaining the first parameter set by training, and the measurement for the second target RS resource set is used for generating or obtaining the second parameter set by training.

As one embodiment, the first parameter set is obtained by training based on training data generated by the measurement for the first target RS resource set, and the second parameter set is obtained by training based on training data generated by the measurement for the second target RS resource set.

As one embodiment, the first parameter set is obtained by training based on a first group of training datasets, and the second parameter set is obtained by training based on a second group of training datasets; the first group of training datasets comprises one or more training datasets, and the second group of training datasets comprises one or more training datasets; and the first target RS resource set comprises RS resources corresponding to the first group of training datasets, and the second target RS resource set comprises RS resources corresponding to the second group of training datasets.

As one embodiment, the measurement for the first target RS resource set is used for generating the first group of training datasets.

As one embodiment, the measurement for the second target RS resource set is used for generating the second group of training datasets.

As one embodiment, the measurement for at least one RS resource in the first target RS resource set is used for generating the first group of training datasets.

As one embodiment, the measurement for at least one RS resource in the second target RS resource set is used for generating the second group of training datasets.

As one embodiment, the first parameter set corresponds to a first TCI set, and the second parameter set corresponds to a second TCI set.

As one embodiment, the first TCI set comprises one or more TCI states, and the second TCI set comprises one or more TCI states.

As one embodiment, the first parameter set corresponds to a first CORESET (Control Resource Set) pool, and the second parameter set corresponds to a second CORESET pool.

As one embodiment, the first CORESET pool comprises one or more CORESETs, and the second CORESET pool comprises one or more CORESETs.

As one embodiment, the first CORESET pool and the second CORESET pool are respectively indicated or identified by different coresetPoolIndexes.

As one embodiment, the first parameter set corresponds to a first PCI (Physical Cell IDentity), and the second parameter set corresponds to a second PCI.

As one embodiment, the first PCI is a PCI of a first serving cell, the second PCI is a PCI of a second serving cell, and the first serving cell is different from the second serving cell.

As one embodiment, the first PCI is the PCI of the first serving cell, and the second PCI is one PCI different from the first PCI.

As one sub-embodiment of this embodiment, the first PCI is the PCI of the first serving cell, and the second PCI is one PCI configured to the first serving cell and different from the PCI of the first serving cell.

As one sub-embodiment of this embodiment, the first PCI is a PhysCellId of the first serving cell, and the second PCI is one PhysCellId different from the first PCI.

As one sub-embodiment of this embodiment, the first PCI is the PhysCellId of the first serving cell, and the second PCI is one PhysCellId configured to the first serving cell and different from the PhysCellId of the first serving cell.

As one embodiment, the first PCI is different from the second PCI.

As one embodiment, the first PCI and the second PCI are two different non-negative integers.

As one embodiment, the first PCI and the second PCI are two different PCIs.

As one embodiment, the first PCI and the second PCI are two different PhysCellIds.

As one embodiment, the first PCI and the second PCI are two different positive integers.

As one embodiment, the first PCI is one Serving Cell PCI, and the second PCI is one Additional PCI.

As one embodiment, specific definitions of the PhysCellId refer to Chapter 6.3.2 of 3GPP TS38.331.

As one embodiment, the specific definitions of the PhysCellId, the Serving Cell PCI, and the Additional PCI refer to 3GPP TS38.214.

As one embodiment, the first target RS resource set comprises at least one RS resource that is comprised in the TCI state of at least one CORESET in the first CORESET pool, and the second target RS resource set comprises at least one RS resource that is comprised in the TCI state of at least one CORESET in the second CORESET pool.

As one embodiment, the first target RS resource set comprises at least one RS resource that is comprised in at least one TCI state configured for the first CORESET pool, and the second target RS resource set comprises at least one RS resource that is comprised in at least one TCI state configured for the second CORESET pool.

As one embodiment, the first target RS resource set comprises at least one RS resource that is comprised in at least one TCI state configured for a PDSCH transmission for the first CORESET pool, and the second target RS resource set comprises at least one RS resource that is comprised in at least one TCI state configured for the PDSCH transmission for the second CORESET pool.

As one embodiment, the first target RS resource set comprises at least one RS resource that is comprised in at least one TCI state in the first TCI set, and the second target RS resource set comprises at least one RS resource that is comprised in at least one TCI state in the second TCI set.

As one embodiment, the first target RS resource set corresponds to the first PCI, and the second target RS resource set corresponds to the second PCI.

As one embodiment, a PCI of any RS resource in the first target RS resource set is the first PCI, and a PCI of any RS resource in the second target RS resource set is the second PCI.

As one embodiment, the meaning of "the first target RS resource set corresponds to the first PCI" comprises: the PCI of any RS resource in the first target RS resource set is the first PCI; and the meaning of "the second target RS resource set corresponds to the second PCI" comprises: the PCI of any RS resource in the second target RS resource set is the second PCI.

As one embodiment, the meaning of "the first target RS resource set corresponds to the first PCI" comprises: the PCI of at least one RS resource in the first target RS resource set is the first PCI; and the meaning of "the second target RS resource set corresponds to the second PCI" comprises: the PCI of at least one RS resource in the second target RS resource set is the second PCI.

As one embodiment, the meaning of "the first target RS resource set corresponds to the first PCI" comprises: the first target RS resource set is configured with the first PCI; and the meaning of "the second target RS resource set corresponds to the second PCI" comprises: the second target RS resource set is configured with the second PCI.

As one embodiment, the first target RS resource set comprises one or more of the CSI-RS resource or the SS/PBCH block resource.

As one embodiment, the first target RS resource set comprises the CSI-RS resource.

As one embodiment, the first target RS resource set comprises one or more of the CSI-RS resource, the SS/PBCH block resource, or an SRS resource.

As one embodiment, the second target RS resource set comprises one or more of the CSI-RS resource or the SS/PBCH block resource.

As one embodiment, the second target RS resource set comprises the CSI-RS resource.

As one embodiment, the second target RS resource set comprises one or more of the CSI-RS resource, the SS/PBCH block resource, or the SRS resource.

As one embodiment, the target parameter set is one of the first parameter set and the second parameter set.

As one embodiment, the target parameter set is the first parameter set.

As one embodiment, the target parameter set is the second parameter set.

As one embodiment, the first indication indicates an index of the parameter group which is used by the first code in the target parameter set.

As one embodiment, the number of parameter groups that are comprised in the target parameter set is equal to G1, G1 is a positive integer, and the first indication indicates the index of the parameter group which is used by the first code in the target parameter set; and the index of the parameter group which is used by the first code in the target parameter set is one of 0, 1, ..., and G1-1, or the index of the parameter group which is used by the first code in the target parameter set is one of 1, 2, ..., and G1.

As one embodiment, the first indication comprises G bits, and G is a positive integer.

As one sub-embodiment of the above embodiments, G is configurable.

As one sub-embodiment of the above embodiments, G is pre-defined.

As one sub-embodiment of the above embodiments, G is default.

As one sub-embodiment of the above embodiments, G is reported by the first node.

As one embodiment, the first indication comprises G bits, G is a positive integer, and G depends on the number of parameter groups that are comprised in the target parameter set.

As one sub-embodiment of the above embodiments, G is equal to the smallest positive integer that is not less than a base-2 logarithm of a first integer, and the first integer is equal to the number of parameter groups that are comprised in the target parameter set.

As one sub-embodiment of the above embodiments, G is not less than a base-2 logarithm of the first integer, and the first integer is equal to the number of parameter groups that are comprised in the target parameter set.

As one sub-embodiment of the above embodiments, G is less than a base-2 logarithm of a target integer, and the target integer is equal to the sum of the number of parameter groups that are comprised in the first parameter set and the number of parameter groups that are comprised in the second parameter set.

As one embodiment, the first indication comprises G bits, G is a positive integer, and G depends on a maximum value between the number of parameter groups that are comprised in the first parameter set and the number of parameter groups that are comprised in the second parameter set.

As one sub-embodiment of the above embodiments, G is equal to the smallest positive integer that is not less than a base-2 logarithm of a second integer, and the second integer is equal to the maximum value between the number of parameter groups that are comprised in the first parameter set and the number of parameter groups that are comprised in the second parameter set.

As one sub-embodiment of the above embodiments, G is not less than a base-2 logarithm of the second integer, and the second integer is equal to the maximum value between the number of parameter groups that are comprised in the first parameter set and the number of parameter groups that are comprised in the second parameter set.

As one sub-embodiment of the above embodiments, G is less than a base-2 logarithm of the target integer, and the target integer is equal to the sum of the number of parameter groups that are comprised in the first parameter set and the number of parameter groups that are comprised in the second parameter set.

As one embodiment, the first indication comprises G bits, and G is a positive integer; and the number of parameter groups that are comprised in the target parameter set is equal to G1, G1 bits of the G bits respectively correspond to G1 parameter groups in the target parameter set, and G1 is a positive integer not greater than G.

As one sub-embodiment of the above embodiments, the parameter group which is used by the first code is the parameter group corresponding to one bit with a value of 1 among the G1 bits.

As one sub-embodiment of the above embodiments, the parameter group which is used by the first code is the parameter group corresponding to one bit with the value of 0 among the G1 bits.

As one sub-embodiment of the above embodiments, the value of only one bit among the G1 bits is 1, and the values of other bits among the G bits are all 0.

As one sub-embodiment of the above embodiments, the value of only one bit among the G1 bits is 0, and the values of other bits among the G bits are all 1.

As one sub-embodiment of the above embodiments, G1 is equal to G.

As one sub-embodiment of the above embodiments, G1 is less than G.

As one sub-embodiment of the above embodiments, G is less than the sum of the number of parameter groups that are comprised in the first parameter set and the number of parameter groups that are comprised in the second parameter set.

As one sub-embodiment of the above embodiments, G is equal to the number of parameter groups that are comprised in the target parameter set.

As one sub-embodiment of the above embodiments, G is equal to the number of parameter groups that are comprised in the first parameter set or the number of parameter groups that are comprised in the second parameter set.

As one sub-embodiment of the above embodiments, G is equal to the maximum value between the number of parameter groups that are comprised in the first parameter set and the number of parameter groups that are comprised in the second parameter set.

As one sub-embodiment of the above embodiments, G is not less than the number of parameter groups that are comprised in the target parameter set.

As one sub-embodiment of the above embodiments, G is not less than to the maximum value between the number of parameter groups that are comprised in the first parameter set and the number of parameter groups that are comprised in the second parameter set.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem) and a packet switching service.

As one embodiment, the UE201 corresponds to a first node in the present application, and the gNB203 corresponds to a second node in the present application.

As one embodiment, the UE201 supports generating a report using AI (Artificial Intelligence) or machine learning.

As one embodiment, the UE201 supports generating a trained model using training data or generating part of parameters of a trained model using training data.

As one embodiment, the UE201 supports determining at least part of parameters of a CNN (Convolutional Neural Network) for CSI reconstruction through training.

As one embodiment, the gNB203 supports generating the report using the AI (Artificial Intelligence) or machine learning.

As one embodiment, the gNB203 supports generating the trained model using training data or generating part of parameters of the trained model using training data.

As one embodiment, the gNB203 supports determining at least part of parameters of the CNN (Convolutional Neural Network) for the CSI reconstruction through training.

As one embodiment, the UE201 is a terminal supporting MIMO.

As one embodiment, the gNB203 supports transmission based on the MIMO.

As one embodiment, the UE201 supports compression on CSI using the AI or deep learning.

As one embodiment, the gNB203 supports decompression on the CSI using the AI or the deep learning.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency difference.

As one embodiment, the gNB203 is one flying platform device.

As one embodiment, the gNB203 is a satellite device.

As one embodiment, the first node and the second node in the present application are respectively the UE201 and the gNB203.

### Embodiment 3

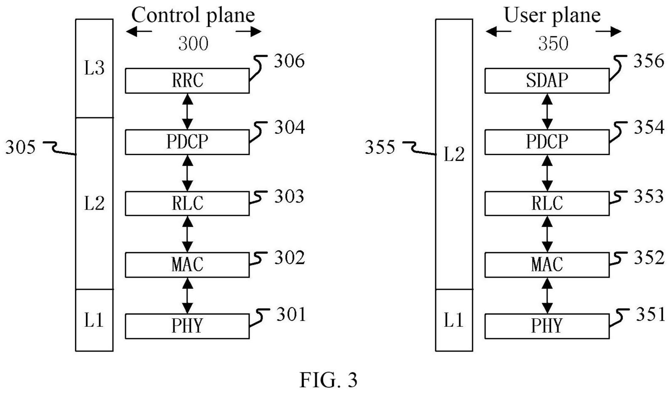

Embodiment 3 illustrates a schematic diagram of an embodiment of a radio protocol architecture for a user plane and a control plane according to one embodiment of the present application, as shown in FIG. 3.

Embodiment 3 shows a schematic diagram of one embodiment of the radio protocol architecture for the user plane and the control plane according to the present application, as shown in FIG. 3. FIG. 3 is a schematic diagram illustrating an embodiment of the radio protocol architecture for a user plane 350 and a control plane 300. FIG. 3 illustrates the radio protocol architecture of the control plane 300 used between a first communication node device (UE, a gNB or an RSU in V2X) and a second communication node device (the gNB, the UE or the RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transmission channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 as for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at the other end (e.g., remote UE, a server, etc.) of a connection.

As one embodiment, the radio protocol architecture in FIG. 3 is applicable to a first node in the present application.

As one embodiment, the radio protocol architecture in FIG. 3 is applicable to a second node in the present application.

As one embodiment, a first information block is generated in the RRC sublayer 306.

As one embodiment, first channel information is generated in the PHY301 or a PHY351.

As one embodiment, a first indication is generated in the RRC sublayer 306.

As one embodiment, the first indication is generated in the MAC sublayer 302 or the MAC sublayer 352.

As one embodiment, a first signaling is generated in the PHY301.

As one embodiment, the first signaling is generated in the PHY351.

As one embodiment, a third information block is generated in the RRC sublayer 306.

As one embodiment, the third information block is generated in the MAC sublayer 302 or the MAC sublayer 352.

### Embodiment 4

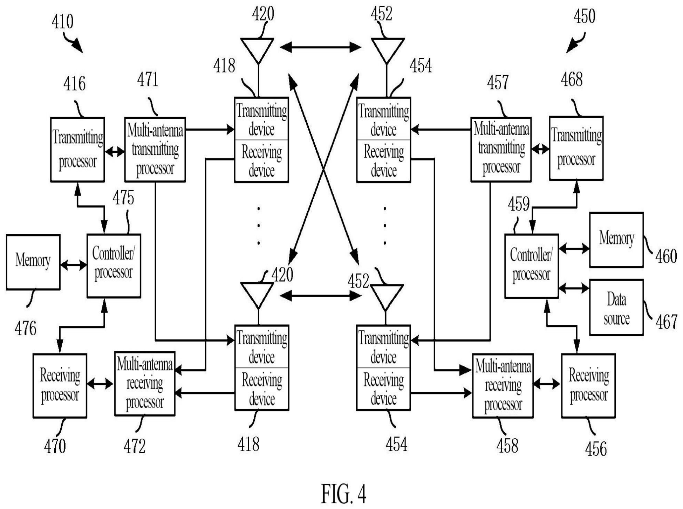

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper-layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operations, retransmission of lost packets, and signalings to the second communication device 450. The transmitting processor 416 and the multi-antenna transmitting processor 471 implement various signal processing functions used for an L1 layer (i.e., a physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a sub-carrier, multiplexes the modulated symbols with a reference signal (e.g., pilot) in a time domain and/or a frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a Fast Fourier Transform (FFT) to convert the baseband multi-carrier symbol stream subjected to the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal undergoes multi-antenna detection in the multi-antenna receiving processor 458 to recover any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the DL (DownLink), the controller/processor 459 provides demultiplexing between transmission and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the DL, the controller/processor 459 implements header compression, encryption, packet segmentation and reordering, and multiplexing between logical and transmission channels based on the radio resource allocation of the first communication device 410, and implements the functions of the L2 layer for the user plane and the control plane. The controller/processor 459 is also responsible for HARQ operations, retransmission of lost packets, and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated parallel stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts a baseband symbol stream provided by the multi-antenna transmitting processor 457 into a radio frequency symbol stream, which is then provided to different antennas 452.

In a transmission from the second communication device 450 to the first communication device 410, functions at the first communication device 410 are similar to receiving functions at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides multiplexing, packet reassembly, decryption, header decompression, and control signal processing between transmission and logical channels to recover upper-layer data packets from the second communication device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first information block, wherein the first information block is used for indicating a first RS resource set, and the first RS resource set comprises one or more RS resources; and sends first channel information, wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, the second communication device 450 comprises: a memory storing a computer-readable instruction program, the computer-readable instruction program generating actions when executed by at least one processor, and the actions comprising: receiving the first information block, wherein the first information block is used for indicating the first RS resource set, and the first RS resource set comprises one or more RS resources; and sending the first channel information, wherein the first code is used for generating the first channel information, and the measurement for at least one RS resource in the first RS resource set is used for generating the input of the first code; the parameter group which is used by the first code belongs to the first parameter set or the second parameter set, the first parameter set comprises one or more parameter groups, the second parameter set comprises one or more parameter groups, the first parameter set is obtained by training, and the second parameter set is obtained by training; and the first indication is used for indicating, from only the target parameter set of the first parameter set and the second parameter set, the parameter group which is used by the first code, and the target parameter set is the first parameter set or the second parameter set.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least: sends the first information block, the first information block being used for indicating the first RS resource set, and the first RS resource set comprising one or more RS resources; and receives the first channel information, wherein the first code is used for generating the first channel information, and the measurement for at least one RS resource in the first RS resource set is used for generating the input of the first code; the parameter group which is used by the first code belongs to the first parameter set or the second parameter set, the first parameter set comprises one or more parameter groups, the second parameter set comprises one or more parameter groups, the first parameter set is obtained by training, and the second parameter set is obtained by training; and the first indication is used for indicating, from only the target parameter set of the first parameter set and the second parameter set, the parameter group which is used by the first code, and the target parameter set is the first parameter set or the second parameter set.

As one embodiment, the first communication device 410 comprises: a memory storing a computer-readable instruction program, the computer-readable instruction program generating actions when executed by at least one processor, and the actions comprising: sending the first information block, the first information block being used for indicating the first RS resource set, and the first RS resource set comprising one or more RS resources; and receiving the first channel information, wherein the first code is used for generating the first channel information, and the measurement for at least one RS resource in the first RS resource set is used for generating the input of the first code; the parameter group which is used by the first code belongs to the first parameter set or the second parameter set, the first parameter set comprises one or more parameter groups, the second parameter set comprises one or more parameter groups, the first parameter set is obtained by training, and the second parameter set is obtained by training; and the first indication is used for indicating, from only the target parameter set of the first parameter set and the second parameter set, the parameter group which is used by the first code, and the target parameter set is the first parameter set or the second parameter set.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the first indication in the present application; and at least one of {the antenna 420, the transmitting device 418, the transmitting processor 416, the multi-antenna transmitting processor 471, the controller/processor 475, and the memory 476} is used for sending the first indication in the present application.

As one embodiment, at least one of {the antenna 452, the receiving device 454, the receiving processor 456, the multi-antenna receiving processor 458, the controller/processor 459, the memory 460, and the data source 467} is used for receiving a first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving a third information block in the present application; and at least one of {the antenna 420, the transmitting device 418, the transmitting processor 416, the multi-antenna transmitting processor 471, the controller/processor 475, and the memory 476} is used for sending the third information block in the present application.

As one embodiment, at least one of {the antenna 452, the transmitting device 454, the transmitting processor 468, the multi-antenna transmitting processor 457, the controller/processor 459, and the memory 460} is used for sending the first channel information in the present application; and at least one of {the antenna 420, the receiving device 418, the receiving processor 470, the multi-antenna receiving processor 472, the controller/processor 475, and the memory 476} is used for receiving the first channel information in the present application.

As one embodiment, at least one of {the antenna 452, the transmitting device 454, the transmitting processor 468, the multi-antenna transmitting processor 457, the controller/processor 459, and the memory 460} is used for sending the first indication in the present application; and at least one of {the antenna 420, the receiving device 418, the receiving processor 470, the multi-antenna receiving processor 472, the controller/processor 475, and the memory 476} is used for receiving the first indication in the present application.

### Embodiment 5

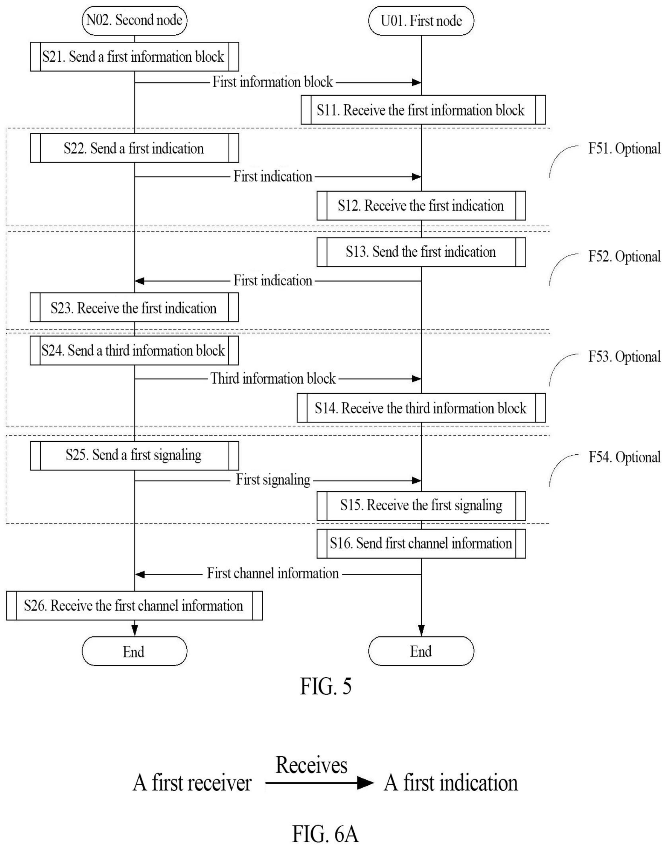

Embodiment 5 illustrates a flowchart of a radio transmission according to one embodiment of the present application, as shown in FIG. 5. In FIG. 5, a first node U01 and a second node N02 are respectively two communication nodes transmitted through an air interface, wherein steps in a box F51, a box F52, a box F53 and a box F54 are respectively optional.

For **the first node U01,** a first information block is received in step S11; a first indication is received in step S12; the first indication is sent in step S13; a third information block is received in step S14; a first signaling is received in step S15; and first channel information is sent in step S16.

For **the second node N02,** the first information block is sent in step S21; the first indication is sent in step S22; the first indication is received in step S23; the third information block is sent in step S24; the first signaling is sent in step S25; and the first channel information is received in step S26.

In Embodiment 5, the first information block is used for indicating a first RS resource set, and the first RS resource set comprises one or more RS resources; a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and the first indication is used for indicating, from only a target parameter set of the first parameter set and the second parameter set, the parameter group which is used by the first code, and the target parameter set is the first parameter set or the second parameter set.

As one embodiment, steps in the box F51, the box F52, the box F53 and the box F54 do not exist.

As one embodiment, at least one step in the box F51, the box F52, the box F53 and the box F54 exists.

As one embodiment, at most one of the box F51 and the box F52 exists.

As one embodiment, a step in the box F51 exists, and a step in the box F52 does not exist.

As one embodiment, the step in the box F51 does not exist, and the step in the box F52 exists.

As one embodiment, the step in a box F51 does not exist, and the step in the box F52 does not exist.

As one embodiment, the first information block and the first indication are received simultaneously.

As one embodiment, the first information block and the first indication are not received simultaneously.

As one embodiment, receiving of the first information block is earlier than receiving of the first indication.

As one embodiment, the receiving of the first information block is not earlier than the receiving of the first indication.

As one embodiment, sending of the first information block is earlier than sending of the first indication.

As one embodiment, the sending of the first information block is not earlier than the sending of the first indication.

As one embodiment, the step in the box F53 does not exist.

As one embodiment, the step in the box F53 exists.

As one embodiment, the third information block is used for indicating whether the target parameter set is the first parameter set or the second parameter set.

As one embodiment, the step in the box F53 exists, and the third information block and the first information block are received simultaneously.

As one embodiment, the step in the box F53 exists, and the third information block and the first information block are not received simultaneously.

As one embodiment, the step in the box F53 exists, and the receiving of the third information block is later than the receiving of the first information block.

As one embodiment, the step in the box F53 exists, and the receiving of the third information block is not later than the receiving of the first information block.

As one embodiment, the step in the box F54 does not exist.

As one embodiment, the step in the box F54 exists.

As one embodiment, the step in the box F54 exists, and the step in the box F51 does not exist.

As one embodiment, the step in the box F54 exists, and none of steps in boxes F51 and F52 exists.

As one embodiment, the first signaling is used for triggering the first channel information.

As one embodiment, the step in the box F54 exist, and the receiving of the first signaling is later than the receiving of the first information block.

As one embodiment, the step in the box F54 does not exist.

### Embodiments 6A-6B

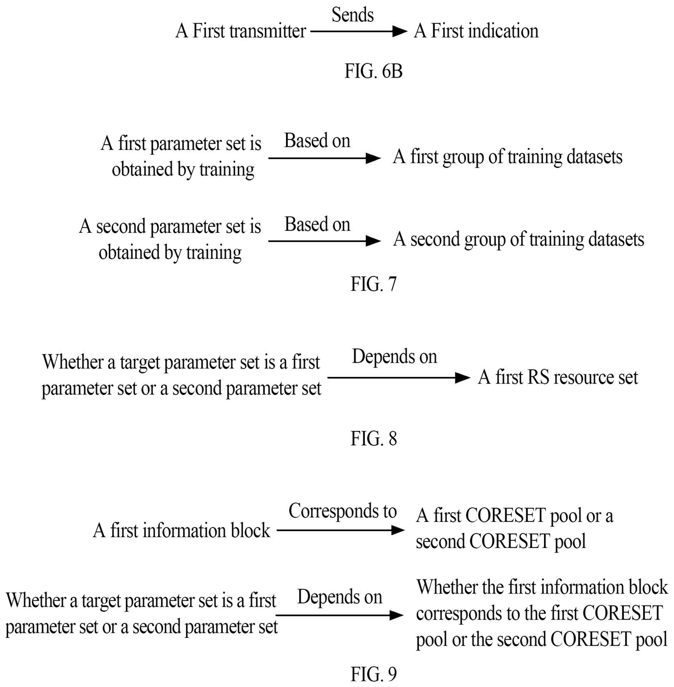

Embodiments 6A-6B respectively illustrate schematic diagrams of a first indication according to one embodiment of the present application, as shown in FIGS. 6A-6B.

In Embodiment 6A, a first receiver receives the first indication.

In Embodiment 6B, a first transmitter sends the first indication.

As one embodiment, the first receiver receives the first indication.

As one sub-embodiment of the above embodiments, the first indication and a first information block belong to the same RRC IE.

As one sub-embodiment of the above embodiments, the first indication and the first information block belong to one CSI-ReportConfig.

As one embodiment, the first receiver receives the first indication, and the first indication and the first information block respectively belong to different RRC IEs.

As one sub-embodiment of the above embodiments, the first indication is carried by a higher layer signaling.

As one sub-embodiment of the above embodiments, the first indication is carried by an RRC signaling.

As one sub-embodiment of the above embodiments, the first indication comprises part of fields in one RRC IE.

As one sub-embodiment of the above embodiments, the first indication comprises part of or all fields in one or more RRC IEs.

As one sub-embodiment of the above embodiments, the first indication is carried by an MAC CE signaling.

As one sub-embodiment of the above embodiments, the first indication is carried by a physical layer signaling.

As one sub-embodiment of the above embodiments, the first indication is carried by a DCI signaling.

As one sub-embodiment of the above embodiment, the first receiver receives a first signaling, the first signaling being used for triggering first channel information; and the first signaling comprises the first indication.

As one sub-embodiment of the above embodiments, the first information block and the first indication are received simultaneously.

As one sub-embodiment of the above embodiments, the first information block and the first indication are not received simultaneously.

As one sub-embodiment of the above embodiments, the receiving of the first information block is earlier than the receiving of the first indication.

As one sub-embodiment of the above embodiments, the receiving of the first information block is not earlier than the receiving of the first indication.

As one embodiment, the first transmitter sends the first indication.

As one sub-embodiment of the above embodiments, the first indication is carried by a physical layer channel.

As one sub-embodiment of the above embodiments, the first indication is carried by a PUCCH.

As one sub-embodiment of the above embodiments, the first indication is carried by a PUSCH.

As one sub-embodiment of the above embodiments, the first indication belongs to one piece of UCI (Uplink Control Information).

As one sub-embodiment of the above embodiments, the first indication belongs to one piece of CG (Configured Grant) UCI.

As one sub-embodiment of the above embodiments, the first information block and the first indication belong to the same UCI.

As one sub-embodiment of the above embodiments, the first information block and the first indication belong to the same CSI report.

As one sub-embodiment of the above embodiments, the first information block and the first indication are carried by the same physical channel.

As one sub-embodiment of the above embodiments, the first information block and the first indication are carried by the same PUSCH.

As one sub-embodiment of the above embodiments, the first information block and the first indication are carried by the same PUCCH.

As one sub-embodiment of the above embodiments, the first information block and the first indication are carried by different physical channels.

As one sub-embodiment of the above embodiments, the first information block and the first indication belong to different CSI reports.

As one sub-embodiment of the above embodiments, the first information block and the first indication are sent simultaneously.

As one sub-embodiment of the above embodiments, the first information block and the first indication are not sent simultaneously.

As one sub-embodiment of the above embodiments, sending of the first information block is earlier than sending of the first indication.

As one sub-embodiment of the above embodiments, the sending of the first information block is not earlier than the sending of the first indication.

### Embodiment 7

Embodiment 7 illustrates a schematic diagram of a first group of training datasets and a second group of training datasets according to one embodiment of the present application, as shown in FIG. 7.

In Embodiment 7, a first parameter set is obtained by training based on the first group of training datasets, and a second parameter set is obtained by training based on the second group of training datasets; and the first group of training datasets comprises one or more training datasets, and the second group of training datasets comprises one or more training datasets.

As one embodiment, a first target RS resource set comprises part of or all RS resources corresponding to the first group of training datasets, and a second target RS resource set comprises part of or all RS resources corresponding to the second group of training datasets.

As one embodiment, any training dataset in the first group of training datasets and the second group of training datasets is used for training to obtain at least one parameter group in only one parameter set of the first parameter set or the second parameter set.

As one embodiment, an RS resource corresponding to one training dataset comprises a downlink RS resource.

As one embodiment, the RS resource corresponding to one training dataset comprises one or more of a CSI-RS resource, an SS/PBCH block resource, or an SRS resource.

As one embodiment, the RS resource corresponding to one training dataset comprises at least one of the CSI-RS resource or the SS/PBCH block resource.

As one embodiment, the RS resource corresponding to one training dataset comprises the CSI-RS resource.

As one embodiment, one training dataset comprises one or more pieces of training data.

As one embodiment, one training dataset comprises channel information obtained by a measurement for one or more RS resources.

As one embodiment, one training dataset corresponds to one or more RS resources.

As one embodiment, one training dataset corresponds to a plurality of RS resources.

As one embodiment, the meaning of "one training dataset corresponds to one RS resource" comprises: the one training dataset comprises training data generated by the measurement for the one RS resource.

As one embodiment, the meaning of "one training dataset corresponds to one RS resource" comprises: the one training dataset comprises the channel information obtained by the measurement for the one RS resource.

As one embodiment, the meaning of "one training dataset corresponds to one RS resource" comprises: the measurement for the one RS resource is used for generating an input of a first code, and the one training dataset comprises the input of the first code generated by the measurement for the one RS resource.

As one embodiment, the meaning of "one training dataset corresponds to one RS resource" comprise: the measurement for the one RS resource is used for generating the input of the first code, and the one training dataset comprises the input of the first code generated by the measurement for the one RS resource and an output after the input undergoes the first code.

As one embodiment, the meaning of "one training dataset corresponds to one RS resource" comprises: the measurement for the one RS resource is used for generating the input of the first code, and the one training dataset comprises the output after the input of the first code that is generated by the measurement for the one RS resource undergoes the first code and the output of a first decode that is obtained by using the output as the input of the first decode.

As one embodiment, the meaning of "one training dataset corresponds to one RS resource" comprises: the measurement for the one RS resource is used for generating the input of the first code, and the one training dataset comprises the input of the first code that is generated by the measurement for the one RS resource, the output after the input undergoes the first code, and the output of the first decode that is obtained by using the output as the input of the decode.

As one embodiment, one piece of training data in one training dataset comprises the input and the output of the first code.

As one embodiment, one piece of training data in one training dataset comprises the input and the output of the first decode.

### Embodiment 8

Embodiment 8 illustrates a schematic diagram of a target parameter set depending on a first RS resource set according to one embodiment of the present application, as shown in FIG. 8.

In Embodiment 8, whether the target parameter set is a first parameter set or a second parameter set depends on the first RS resource set.

As one embodiment, the meaning of "whether the target parameter set is a first parameter set or a second parameter set depends on the first RS resource set" comprises: whether the target parameter set is the first parameter set or the second parameter set depends on a TCI state of the first RS resource set.

As one embodiment, one TCI state is configured with at least one reference signal and one QCL type.

As one embodiment, the one TCI state comprises at least one piece of QCL information.

As one embodiment, the one TCI state comprises one or two pieces of QCL information.

As one embodiment, the QCL information indicates one reference signal and one QCL type.

As one embodiment, the reference signal comprises one of a CSI-RS or an SSB.

As one embodiment, the reference signal comprises the CSI-RS.

As one embodiment, the reference signal comprises the SSB.

As one embodiment, the QCL type comprises a typeA, a typeB, a typeC and a typeD.

As one embodiment, the QCL type is one of the typeA, the typeB, the typeC, and the typeD.

As one embodiment, specific definitions of the TCI state refer to Chapter 5 of 3GPP TS 38.214.

As one embodiment, the meaning of "whether the target parameter set is a first parameter set or a second parameter set depends on a TCI state of the first RS resource set" comprises: whether the target parameter set is the first parameter set or the second parameter set depends on whether the TCI state of the first RS resource set belongs to a first TCI set or a second TCI set; when the TCI state of the first RS resource set belongs to the first TCI set, the target parameter set is the first parameter set; and when the TCI state of the first RS resource set belongs to the second TCI set, the target parameter set is the second parameter set.

As one embodiment, the first TCI set comprises one or more TCI states.

As one embodiment, the second TCI set comprises one or more TCI states.

As one embodiment, the first TCI set is associated with a first target RS resource set.

As one embodiment, the second TCI set is associated with a second target RS resource set.

As one embodiment, the meaning of "the first TCI set is associated with a first target RS resource set" comprises: the TCI state of part of or all RS resources in the first target RS resource set belongs to the first TCI set.

As one embodiment, the meaning of "the first TCI set is associated with a first target RS resource set" comprises: the TCI state of part of RS resources in the first target RS resource set belongs to the first TCI set.

As one embodiment, the meaning of "the first TCI set is associated with a first target RS resource set" comprises: the TCI state of any RS resource in the first target RS resource set belongs to the first TCI set.

As one embodiment, the meaning of "the first TCI set is associated with a first target RS resource set" comprises: the reference signal configured for part of or all TCI states in the first TCI set belongs to the first target RS resource set.

As one embodiment, the meaning of "the first TCI set is associated with a first target RS resource set" comprises: the reference signal configured for part of TCI states in the first TCI set belongs to the first target RS resource set.

As one embodiment, the meaning of "the first TCI set is associated with a first target RS resource set" comprises: at least one reference signal configured for any TCI state in the first TCI set belongs to the first target RS resource set.

As one embodiment, the meaning of "the first TCI set is associated with a first target RS resource set" comprises: one reference signal configured for any TCI state in the first TCI set is one RS resource in the first target RS resource set.

As one embodiment, the meaning of "the second TCI set is associated with a second target RS resource set" comprises: the TCI state of part of or all RS resources in the second target RS resource set belongs to the second TCI set.

As one embodiment, the meaning of "the second TCI set is associated with a second target RS resource set" comprises: the TCI state of part of RS resources in the second target RS resource set belongs to the second TCI set.

As one embodiment, the meaning of "the second TCI set is associated with a second target RS resource set" comprises: the TCI state of any RS resource in the second target RS resource set belongs to the second TCI set.

As one embodiment, the meaning of "the second TCI set is associated with a second target RS resource set" comprises: the reference signal configured for part of or all TCI states in the second TCI set belongs to the second target RS resource set.

As one embodiment, the meaning of "the second TCI set is associated with a second target RS resource set" comprises: the reference signal configured for part of TCI states in the second TCI set belongs to the second target RS resource set.

As one embodiment, the meaning of "the second TCI set is associated with a second target RS resource set" comprises: at least one reference signal configured for any TCI state in the second TCI set belongs to the second target RS resource set.

As one embodiment, the meaning of "the second TCI set is associated with a second target RS resource set" comprises: one reference signal configured for any TCI state in the second TCI set is one RS resource in the second target RS resource set.

As one embodiment, the meaning of "whether the target parameter set is a first parameter set or a second parameter set depends on the first RS resource set" comprises: whether the target parameter set is the first parameter set or the second parameter set depends on the QCL information of the first RS resource set.

As one embodiment, the meaning of "whether the target parameter set is a first parameter set or a second parameter set depends on the first RS resource set" comprises: the first RS resource set is associated with the first target RS resource set or the second target RS resource set, and whether the target parameter set is the first parameter set or the second parameter set depends on whether the first RS resource set is associated with the first target RS resource set or the second target RS resource set.

As one embodiment, the meaning of "whether the target parameter set is a first parameter set or a second parameter set depends on the first RS resource set" comprise: when the first RS resource set is associated with the first target RS resource set, the target parameter set is the first parameter set; and when the first RS resource set is associated with the second target RS resource set, the target parameter set is the second parameter set.

As one embodiment, the meaning of "the first RS resource set is associated with a first target RS resource set" comprises: any RS resource in the first RS resource set and one RS resource in the first target RS resource set are QCL; and the meaning of "the first RS resource set is associated with a second target RS resource set" comprises: any RS resource in the first RS resource set and one RS resource in the second target RS resource set are QCL.

As one embodiment, the meaning of "the first RS resource set is associated with a first target RS resource set" comprises: any RS resource in the first RS resource set and one RS resource in the first target RS resource set have the same QCL information; and the meaning of "the first RS resource set is associated with a second target RS resource set" comprises: any RS resource in the first RS resource set and one RS resource in the second target RS resource set have the same QCL information.

As one embodiment, the meaning of "the first RS resource set is associated with a first target RS resource set" comprises: QCL information of any RS resource in the first RS resource set is determined by one RS resource in the first target RS resource set; and the meaning of "the first RS resource set is associated with a second target RS resource set" comprises: the QCL information of any RS resource in the first RS resource set is determined by one RS resource in the second target RS resource set.

As one embodiment, the meaning of "the first RS resource set is associated with a first target RS resource set" comprises: any RS resource in the first RS resource set belongs to the first target RS resource set; and the meaning of "the first RS resource set is associated with a second target RS resource set" comprises: any RS resource in the first RS resource set belongs to the second target RS resource set.

As one embodiment, the meaning of "the first RS resource set is associated with a first target RS resource set" comprises: at least one RS resource in the first RS resource set and one RS resource in the first target RS resource set are QCL; and the meaning of "the first RS resource set is associated with a second target RS resource set" comprises: at least one RS resource in the first RS resource set and one RS resource in the second target RS resource set are QCL.

As one embodiment, the meaning of "the first RS resource set is associated with a first target RS resource set" comprises: at least one RS resource in the first RS resource set and one RS resource in the first target RS resource set have the same QCL information; and the meaning of "the first RS resource set is associated with a second target RS resource set" comprises: at least one RS resource in the first RS resource set and one RS resource in the second target RS resource set have the same QCL information.

As one embodiment, the meaning of "the first RS resource set is associated with a first target RS resource set" comprises: the QCL information of at least one RS resource in the first RS resource set is determined by one RS resource in the first target RS resource set; and the meaning of "the first RS resource set is associated with a second target RS resource set" comprises: the QCL information of at least one RS resource in the first RS resource set is determined by one RS resource in the second target RS resource set.

As one embodiment, the meaning of "the first RS resource set is associated with a first target RS resource set" comprises: at least one RS resource of the first RS resource belongs to the first target RS resource set; and the meaning of "the first RS resource set is associated with a second target RS resource set" comprises: at least one RS resource in the first RS resource set belongs to the second target RS resource set.

### Embodiment 9

Embodiment 9 illustrates a schematic diagram of a first information block corresponding to a first CORESET pool or a second CORESET pool according to one embodiment of the present application, as shown in FIG. 9.

In Embodiment 9, the first information block corresponds to the first CORESET pool or the second CORESET pool, and whether a target parameter set is a first parameter set or a second parameter set depends on whether the first information block corresponds to the first CORESET pool or the second CORESET pool.

As one embodiment, when the first information block corresponds to the first CORESET pool, the target parameter set is the first parameter set; and when the first information block corresponds to the second CORESET pool, the target parameter set is the second parameter set.

As one embodiment, the meaning of "the first information block corresponds to the first CORESET pool" comprises: the first information block is configured to the first CORESET pool; and the meaning of "the first information block corresponds to the second CORESET pool" comprises: the first information block is configured to the second CORESET pool.

As one embodiment, the meaning of "the first information block corresponds to the first CORESET pool" comprises: the first information block belongs to configuration information of the first CORESET pool; and the meaning of "the first information block corresponds to the second CORESET pool" comprises: the first information block belongs to the configuration information of the second CORESET pool.

As one embodiment, the meaning of "the first information block corresponds to the first CORESET pool" comprises: the first information block comprises an index or identifier of the first CORESET pool; and the meaning of "the first information block corresponds to the second CORESET pool" comprises: the first information block comprises the index or identifier of the second CORESET pool.

As one embodiment, the index or identifier of the first CORESET pool is one non-negative integer.

As one embodiment, the index or identifier of the first CORESET pool is one of 0 or 1.

As one embodiment, the name of the index or identifier of the first CORESET pool comprises a coresetPoolIndex.

As one embodiment, the index or identifier of the first CORESET pool is indicated by the coresetPoolIndex.

As one embodiment, the index or identifier of the second CORESET pool is one non-negative integer.

As one embodiment, the index or identifier of the second CORESET pool is one of 0 or 1.

As one embodiment, the name of the index or identifier of the second CORESET pool comprises the coresetPoolIndex.

As one embodiment, the index or identifier of the second CORESET pool is indicated by the coresetPoolIndex.

As one embodiment, the index or identifier of the first CORESET pool and the index or identifier of the second CORESET pool are respectively indicated by different coresetPoolIndexes.

As one embodiment, the index or identifier of the first CORESET pool and the index or identifier of the second CORESET pool are different.

As one embodiment, the index or identifier of the first CORESET pool is 0, and the index or identifier of the second CORESET pool is 1.

As one embodiment, the index or identifier of the first CORESET pool is 1, and the index or identifier of the second CORESET pool is 0.

### Embodiment 10

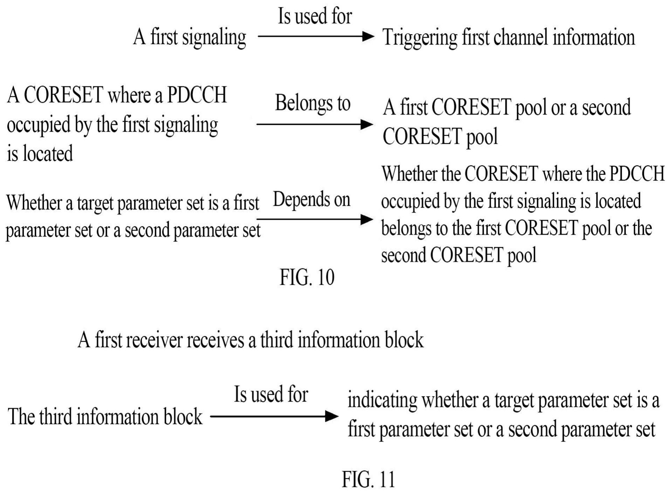

Embodiment 10 illustrates a schematic diagram of a first signaling according to one embodiment of the present application, as shown in FIG. 10.

In Embodiment 10, a first receiver in the present application receives the first signaling, the first signaling being used for triggering first channel information, wherein a CORESET where a PDCCH occupied by the first signaling is located belongs to a first CORESET pool or a second CORESET pool; and whether a target parameter set is a first parameter set or a second parameter set depends on whether the CORESET where the PDCCH occupied by the first signaling is located belongs to the first CORESET pool or the second CORESET pool.

As one embodiment, the first signaling is a physical layer signaling.

As one embodiment, the first signaling is a DCI signaling.

As one embodiment, first signaling is the DCI signaling, the first signaling comprises a CSI request field, and the CSI request field comprised in the first signaling is used for triggering the first channel information.

As one embodiment, a first transmitter sends a first indication; and the first signaling is the DCI signaling, the first signaling comprises the CSI request field, and the CSI request field comprised in the first signaling is used for triggering the first channel information and the first indication.

As one embodiment, when the CORESET where the PDCCH occupied by the first signaling is located belongs to the first CORESET pool, the target parameter set is the first parameter set; and when the CORESET where the PDCCH occupied by the first signaling is located belongs to the second CORESET pool, the target parameter set is the second parameter set.

### Embodiment 11

Embodiment 11 illustrates a schematic diagram of a third information block according to one embodiment of the present application, as shown in FIG. 11.

In Embodiment 11, a first receiver in the present application receives the third information block, wherein the third information block is used for indicating whether a target parameter set is a first parameter set or a second parameter set.

As one embodiment, the third information block is carried by a higher layer signaling.

As one embodiment, the third information block is carried by an RRC signaling.

As one embodiment, the third information block is carried by an MAC CE signaling.

As one embodiment, the third information block comprises part of or all fields in one RRC IE.

As one embodiment, the third information block comprises part of fields in one RRC IE.

As one embodiment, the third information block and a first information block belong to the same RRC IE.

As one embodiment, the third information block and the first information block belong to different RRC IEs.

As one embodiment, the third information block and the first information block belong to one CSI-ReportConfig.

As one embodiment, the third information block and the first information block are received simultaneously.

As one embodiment, the third information block and the first information block are not received simultaneously.

As one embodiment, the third information block is received later than the first information block.

As one embodiment, the third information block is received not later than the first information block.

As one embodiment, the third information block indicates that the target parameter set is the first parameter set.

As one embodiment, the third information block indicates that the target parameter set is the second parameter set.

### Embodiments 12A-12B

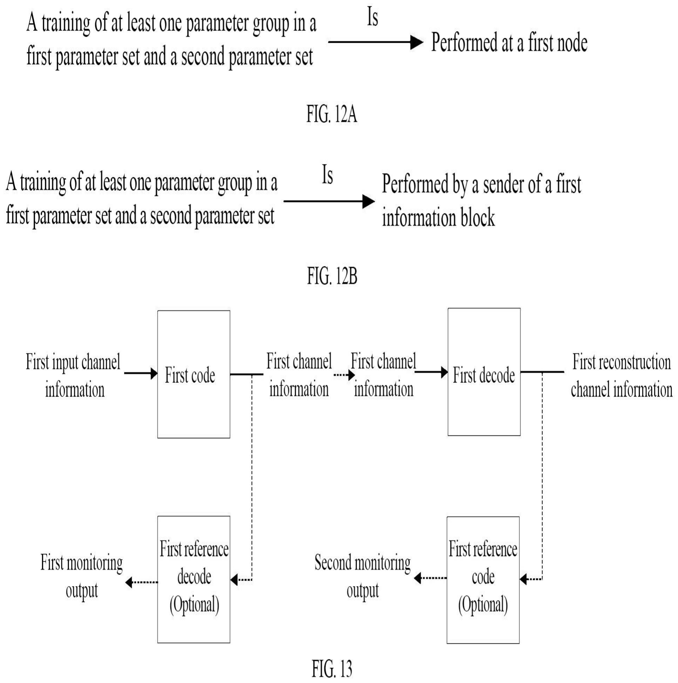

Embodiments 12A-12B respectively illustrate schematic diagrams of a performer of training of at least one parameter group in a first parameter set and a second parameter set according to one embodiment of the present application, as shown in FIGS. 12A-12B.

In Embodiment 12A, the training of at least one parameter group in the first parameter set and the second parameter set is performed at a first node.

In Embodiment 12B, the training of at least one parameter group in the first parameter set and the second parameter set is performed by a sender of a first information block.

As one embodiment, training for each parameter group in the first parameter set and the second parameter set is performed at the first node.

As one embodiment, the training of part of parameter groups in the first parameter set and the second parameter set is performed at the first node.

As one embodiment, the training of each parameter group in the first parameter set is performed at the first node.

As one embodiment, the training of part of parameter groups in the first parameter set is performed at the first node.

As one embodiment, the training of each parameter group in the second parameter set is performed at the first node.

As one embodiment, the training of part of parameter groups in the second parameter set is performed at the first node.

As one embodiment, the training of each parameter group in the first parameter set and the second parameter set is performed by the sender of the first information block.

As one embodiment, the training of part of parameter groups in the first parameter set and the second parameter set is performed by the sender of the first information block.

As one embodiment, the training of each parameter group in the first parameter set is performed by the sender of the first information block.

As one embodiment, the training of part of parameter groups in the first parameter set is performed by the sender of the first information block.

As one embodiment, the training of each parameter group in the second parameter set is performed by the sender of the first information block.

As one embodiment, the training of part of parameter groups in the second parameter set is performed by the sender of the first information block.

### Embodiment 13

Embodiment 13 illustrates a flowchart of a transmission of first channel information according to one embodiment of the present application, as shown in FIG. 13. In FIG. 13, a first reference decode is optional, and a first reference code is optional.

In Embodiment 13, a first code is performed in a first node and a second node in the present application, and a first decode is respectively performed in the first node and the second node in the application.

The first code is used for generating the first channel information, an input of the first code comprises first input channel information, and the measurement for at least one RS resource in a first RS resource set is used for generating the first input channel information;
the first node sends the first channel information to the second node through an air interface; and
the first decode is used for generating first reconstruction channel information, the input of the first decode comprises the first channel information, or the first channel information is used for generating the input of the first decode.

As one embodiment, the second node is a sender of the first information block in the present application.

As one embodiment, the measurement for each RS resource in the first RS resource set is used for generating the first input channel information.

As one embodiment, the measurement for part of RS resources in the first RS resource set is used for generating the first input channel information.

As one embodiment, the measurement for one RS resource in the first RS resource set is used for generating the first input channel information.

As one embodiment, the first input channel information comprises a channel parameter matrix.

As one embodiment, the first input channel information comprises a matrix composed of at least one eigenvector.

As one embodiment, the first input channel information comprises at least one eigenvector.

As one embodiment, the first input channel information comprises the channel parameter matrix obtained by the measurement for at least one RS resource in the first RS resource set.

As one embodiment, the first input channel information comprises the matrix composed of at least one eigenvector generated by the measurement for at least one RS resource in the first RS resource set.

As one embodiment, the first input channel information comprises at least one eigenvector generated by the measurement for at least one RS resource in the first RS resource set.

As one embodiment, the first input channel information comprises only one channel parameter matrix.

As one embodiment, the first input channel information comprises a plurality of channel parameter matrices, and the plurality of channel parameter matrices respectively correspond to a plurality of subbands.

As one embodiment, the first input channel information is generated by the measurement for the same RS resource in the first RS resource set.

As one embodiment, the first input channel information comprises the plurality of channel parameter matrices, and the plurality of channel parameter matrices are respectively generated by the measurement for different RS resources in the first RS resource set.

As one embodiment, the second node is the second node in the present application.

As one embodiment, the first node also performs the first reference decode, the input of the first reference decode comprises the first channel information, and an output of the first reference decode comprises a first monitoring output.

As one embodiment, the second node also performs the first reference code, the input of the first reference code comprises the first reconstruction channel information, and the output of the first reference code comprises a second monitoring output.

As one embodiment, the first code is used for a CSI generation performed at the first node, the CSI generation performed at the first node comprising generating the first channel information.

As one embodiment, the CSI generation performed at the first node comprises a CSI compression performed at the first node, the CSI compression performed at the first node comprising generating the first channel information.

As one embodiment, the first reference code is used for the CSI generation performed at the second node, the CSI generation performed at the second node comprising generating the second monitoring output.

As one embodiment, the CSI generation performed at the second node comprises the CSI compression performed at the second node, the CSI compression performed at the second node comprising generating the second monitoring output.

As one embodiment, the first decode is used for a CSI reconstruction performed at the second node, the CSI reconstruction performed at the second node comprising generating the first reconstruction channel information.

As one embodiment, the first decode performs an inverse operation of the first code.

As one embodiment, the first reference decode performs the inverse operation of the first code.

As one embodiment, the first reference code performs the inverse operation of the first decode.

As one embodiment, the first reference decode is used for the CSI reconstruction performed at the first node, and the CSI reconstruction performed at the first node comprising generating the first monitoring output.

As one embodiment, the first monitoring output and the first input channel information are different.

As one embodiment, the meaning of "the first monitoring output and the first input channel information are different" comprises: the first monitoring output and the first input channel information cannot be considered the same.

As one embodiment, the first monitoring output comprises the first input channel information.

As one embodiment, the first monitoring output comprises an estimation of the first input channel information.

As one embodiment, an error between the first monitoring output and the first input channel information can be used for monitoring the performance of the first code. Common errors may be a mean square error, a cosine similarity, etc.

As one embodiment, the error between the first monitoring output and the first input channel information can be used for training at least one of the first code or the first reference decode.

As one embodiment, the second monitoring output comprises the first channel information.

As one embodiment, the second monitoring output and the first channel information are the same.

As one embodiment, the second monitoring output and the first channel information are different.

As one embodiment, the meaning of "the second monitoring output and the first channel information are different" comprises: the second monitoring output and the first channel information cannot be considered the same.

As one embodiment, the error between the second monitoring output and the first channel information can be used for monitoring the performance of the first decode. Common errors may be the mean square error, the cosine similarity, etc.

As one embodiment, the error between the second monitoring output and the first channel information can be used for training at least one of the first decode or the first code.

As one embodiment, the first code is performed in a first receiver.

As one embodiment, the first code is performed in a first transmitter.

As one embodiment, the first code is performed in at least one of the first receiver or the first transmitter.

As one embodiment, the first reference decode is performed in the first receiver.

As one embodiment, the first reference decode is performed in the first transmitter.

As one embodiment, the first reference decode is performed in at least one of the first receiver or the first transmitter.

As one embodiment, the first decode is performed in a second receiver.

As one embodiment, the first reference code is performed in the second receiver.

As one embodiment, the first reference code is performed in a second transmitter.

As one embodiment, the first reference code is performed in at least one of the second receiver or the second transmitter.

As one embodiment, the first decode and the first reference decode are the same.

As one embodiment, the first decode and the first reference decode are different.

As one embodiment, the meaning of "the first decode and the first reference decode are different" comprises: the first decode and the first reference decode cannot be considered the same.

As one embodiment, the first reference decode and the first decode both perform the inverse operation of the first code, but the two may only be approximate.

As one embodiment, the first reference decode and the first decode are the same, and the first reference decode is available at both the first node and the second node.

As one embodiment, the first reference decode is available only to the first node.

As one embodiment, the above method allows the first node and the second node to use different decodes to process the first channel information, thereby increasing the implementation flexibility for hardware vendors.

As one embodiment, the first code and the first reference code are the same.

As one embodiment, the first code and the first reference code are different.

As one embodiment, the meaning of "the first code and the first reference code are different" comprises: the first code and the first reference code cannot be considered the same.

As one embodiment, the first reference code and the first code both perform the inverse operation of the first decode, but the two may only be approximate.

As one embodiment, the first reference code and the first code are the same, and the first reference code is available at both the first node and the second node.

As one embodiment, the first reference code is only available to the second node.

As one embodiment, the above method allows the first node and the second node to use different codes, thereby increasing the implementation flexibility for hardware vendors.

As one embodiment, an output after inputting the first input channel information into the first code comprises the first channel information.

As one embodiment, the output after inputting the first input channel information into the first code is used for generating the first channel information.

As one embodiment, the meaning of "the first code is used for generating the first channel information" comprises: the output of the first code comprises the first channel information.

As one embodiment, the meaning of "the first code is used for generating the first channel information" comprises: the output of the first code is used for generating the first channel information.

As one embodiment, the meaning of the sentence "an output of the first code is used for generating the first channel information" comprises: the first channel information is calculated based on the output of the first code.

As one embodiment, the meaning of the sentence "an output of the first code is used for generating the first channel information" comprises: the first channel information is the output of a quantization obtained by using the output of the first code as the input of the quantization.

As one embodiment, the meaning of the sentence "an output of the first code is used for generating the first channel information" comprises: the first channel information is the output of a function obtained by using the output of the first code as the input of the function.

As one embodiment, the meaning of the sentence "an output of the first code is used for generating the first channel information" comprises: the first channel information is the output of a transform obtained by using the output of the first code as the input of the transform.

As one embodiment, the meaning of "the first channel information is used for generating an input of the first decode" comprises: the first channel information is input into the first decode after being dequantized.

As one embodiment, the meaning of "the first channel information is used for generating an input of the first decode" comprises: the input of the first decode comprises the output of the first channel information after being input into the function.

As one embodiment, the meaning of "the first channel information is used for generating an input of the first decode" comprises: the input of the first decode comprises a result after the first channel information is transformed.

As one embodiment, the first input channel information is available only to the first node.

As one embodiment, the meaning of the sentence "the first input channel information is available only to the first node" comprises: in both the first node or the second node, the first input channel information is available only to the first node.

As one embodiment, the meaning of the sentence "the first input channel information is available only to the first node" comprises: the first input channel information is generated at the first node, and the first node does not send the first input channel information through the air interface.

As one embodiment, the meaning of the sentence "the first input channel information is available only to the first node" comprises: the first input channel information is generated at the first node, and the first node does not send information through the air interface that can be used for fully reconstructing the first input channel information.

As one embodiment, the meaning of the sentence "the first input channel information is available only to the first node" comprises: the first input channel information is generated at the first node, and the second node does not obtain the first input channel information.

As one embodiment, the first reconstruction channel information is only known to the second node.

As one embodiment, the first reconstruction channel information and the first input channel information are the same.

As one embodiment, the first reconstruction channel information and the first input channel information are different.

As one embodiment, the meaning of the sentence "the first reconstruction channel information and the first input channel information are different" comprises: the first reconstruction channel information and the first input channel information cannot be considered the same.

As one embodiment, when the first reference decode and the first decode are the same, the first reconstruction channel information and the first input channel information are the same.

As one embodiment, when the first reference decode and the first decode are different, the first reconstruction channel information and the first input channel information are different.

As one embodiment, the first code is obtained by training.

As one embodiment, the first code uses an artificial intelligence-based method.

As one embodiment, the training of the first code is performed at the first node.

As one embodiment, the training of the first code is performed at the second node.

As one embodiment, the training for the first code is used for obtaining the first code.

As one embodiment, the training for the first code is used for obtaining the first code and the first reference code.

As one embodiment, the training for the first code is used for obtaining the first code and the first reference decode.

As one embodiment, the training for the first code is used for obtaining the first code and the first decode.

As one embodiment, the training for the first code is used for obtaining at least the first code among the first code, the first reference decode, the first decode, or the first reference code.

As one embodiment, the training for the first code is used for obtaining the first code, the first reference decode, the first decode, and the first reference code.

As one embodiment, the first decode is obtained by training. f

As one embodiment, the first decode uses the artificial intelligence-based method.

As one embodiment, the training of the first decode is performed at the first node.

As one embodiment, the training of the first decode is performed at the second node.

As one embodiment, the first reference code is obtained by training.

As one embodiment, the first reference code uses the artificial intelligence-based method.

As one embodiment, the training of the first reference code is performed at the first node.

As one embodiment, the training of the first reference code is performed at the second node.

As one embodiment, the first reference decode is obtained by training.

As one embodiment, the first reference decode uses the artificial intelligence-based method.

As one embodiment, the training of the first reference decode is performed at the first node.

As one embodiment, the training of the first reference decode is performed at the second node.

As one embodiment, the first reference decode and the first decode are the same, and the first decode is trained, or generated, or maintained in only one node of the first node or the second node.

As one embodiment, the first reference decode and the first decode are trained, or generated, or maintained in only one node of the first node or the second node.

As one embodiment, the first reference decode and the first decode are separately or independently trained, or generated, or maintained in the first node and the second node, respectively.

As one embodiment, the first reference code and the first code are the same, and the first code is trained, or generated, or maintained in only one node of the first node or the second node.

As one embodiment, the first reference code and the first code are trained, or generated, or maintained in only one node of the first node or the second node.

As one embodiment, the first reference code and the first code are separately or independently trained, or independently generated, or independently maintained in the second node and the first node, respectively.

As one embodiment, the first code and the first decode are jointly trained, or generated, or maintained in only one node of the first node or the second node.

As one embodiment, the first code and the first decode are jointly trained, or generated, or maintained in the first node and the second node.

As one embodiment, the first code and the first decode are separately or independently trained, or generated, or maintained in the first node and the second node, respectively.

As one embodiment, a specific operation of the first code is self-determined by an equipment manufacturer.

As one embodiment, the specific operation of the first code is self-determined by the first node or the second node.

As one embodiment, an artificial intelligence algorithm which is used by the first code is self-determined by the equipment manufacturer.

As one embodiment, the artificial intelligence algorithm which is used by the first code is self-determined by the first node or the second node.

As one embodiment, the specific operation of the first decode is self-determined by the equipment manufacturer.

As one embodiment, the specific operation of the first decode is self-determined by the first node or the second node.

As one embodiment, the artificial intelligence algorithm which is used by the first decode is self-determined by the equipment manufacturer.

As one embodiment, the artificial intelligence algorithm which is used by the first decode is self-determined by the first node or the second node.

As one embodiment, the specific operation of the first reference code is self-determined by the equipment manufacturer.

As one embodiment, the specific operation of the first reference code is self-determined by the first node or the second node.

As one embodiment, the artificial intelligence algorithm which is used by the first reference code is self-determined by the equipment manufacturer.

As one embodiment, the artificial intelligence algorithm which is used by the first reference code is self-determined by the first node or the second node.

As one embodiment, the specific operation of the first reference decode is self-determined by the equipment manufacturer.

As one embodiment, the specific operation of the first reference decode is self-determined by the first node or the second node.

As one embodiment, the artificial intelligence algorithm which is used by the first reference decode is self-determined by the equipment manufacturer.

As one embodiment, the artificial intelligence algorithm which is used by the first reference decode is self-determined by the first node or the second node.

As one embodiment, the training of the first code comprises obtaining a parameter group which is used by the first code by training.

As one embodiment, the training of the first code comprises obtaining at least one parameter group among J parameter groups by training, and the parameter group which is used by the first code is one parameter group among the J parameter groups, J being a positive integer greater than 1.

As one embodiment, the training of the first code comprises obtaining J parameter groups by training. The parameter group which is used by the first code is one parameter group among the J parameter groups, J being a positive integer greater than 1.

As one embodiment, the parameter group which is used by the first code is one parameter group among J parameter groups, J being a positive integer greater than 1.

As one embodiment, the J parameter groups are respectively used for describing J models.

As one embodiment, the J parameter groups respectively comprise J models.

As one embodiment, the J parameter groups are respectively J models.

As one embodiment, the J models are respectively J CSI generation models.

As one embodiment, the J parameter groups are different from one another.

As one embodiment, the J parameter groups are self-determined by the equipment manufacturer.

As one embodiment, the J parameter groups are self-determined by the first node or the second node.

As one embodiment, at least one parameter group among the J parameter groups is pre-defined.

As one embodiment, at least one parameter group among the J parameter groups is self-determined by the first node.

As one embodiment, at least one parameter group among the J parameter groups is sent by the second node to the first node.

As one embodiment, the first node sends at least one parameter group among the J parameter groups to the second node.

As one embodiment, at least one parameter group among the J parameter groups is obtained by training.

As one embodiment, each parameter group among the J parameter groups is obtained by training.

As one embodiment, part of parameter groups in the J parameter groups are obtained by training.

As one embodiment, part of or all parameter groups in the J parameter groups are obtained by training.

As one embodiment, the parameter group which is used by the first code is obtained by training.

As one embodiment, the parameter group which is used by the first code comprises one parameter or a plurality of parameters.

As one embodiment, the parameter group which is used by the first code is used for describing the first code.

As one embodiment, the parameter group which is used by the first code is used for describing the model which is used by the first code.

As one embodiment, the parameter group which is used by the first code comprises the model which is used by the first code.

As one embodiment, the parameter group which is used by the first code is the model which is used by the first code.

As one embodiment, the model which is used by the first code is one CSI generation model.

As one embodiment, the training of the first decode comprises obtaining the parameter group which is used by the first decode by training.

As one embodiment, the training of the first decode comprises obtaining at least one parameter group among P parameter groups by training, and the parameter group which is used in the first decode is one parameter group among the P parameter groups, P being a positive integer.

As one embodiment, the training of the first decode comprises obtaining P parameter groups by training, and the parameter group which is used by the first decode is one parameter group among the P parameter groups, P being a positive integer.

As one embodiment, P is equal to 1.

As one embodiment, P is greater than 1, and the P parameter groups are different from one another.

As one embodiment, the parameter group which is used by the first decode is one parameter group among P parameter groups, P being a positive integer.

As one embodiment, the P parameter groups are respectively used for describing P models.

As one embodiment, the P parameter groups respectively comprise P models.

As one embodiment, the P parameter groups are respectively P models.

As one embodiment, the P models are respectively P CSI reconstruction models.

As one embodiment, at least one parameter group among the P parameter groups is pre-defined.

As one embodiment, at least one parameter group among the P parameter groups is self-determined by the second node.

As one embodiment, at least one parameter group among the P parameter groups is sent by the first node to the second node.

As one embodiment, the second node sends at least one parameter group among the P parameter groups to the first node.

As one embodiment, at least one parameter group among the P parameter groups is obtained by training.

As one embodiment, each parameter group among the P parameter groups is obtained by training.

As one embodiment, part of parameter groups in the P parameter groups are obtained by training.

As one embodiment, part of or all parameter groups in the P parameter groups are obtained by training.

As one embodiment, the parameter group which is used by the first code comprises at least one parameter in Embodiment 15.

As one embodiment, the parameter group which is used by the first code comprises the number of coding layers and which one or ones from {a fully connected layer, a convolutional layer, a pooling layer} are comprised.

As one embodiment, the parameter group which is used by the first code comprises at least one of the number of coding layers, a size of input parameters of the coding layers, or a size of output parameters of the coding layers.

As one embodiment, the parameter group which is used by the first code comprises at least one of the number of coding layers, the size of input parameters of the coding layers, the size of output parameters of the coding layers, a threshold of an activation function, the size of a convolution kernel, a stride of the convolution kernel, or weights between feature maps.

As one embodiment, at least one parameter group among the J parameter groups comprises at least one parameter in Embodiment 15.

As one embodiment, at least one parameter group among the J parameter groups comprises the number of coding layers and which one or ones from {the fully connected layer, the convolutional layer, the pooling layer} are comprised.

As one embodiment, at least one parameter group among the J parameter groups comprises at least one of the number of coding layers, the size of input parameters of the coding layers, or the size of output parameters of the coding layers.

As one embodiment, at least one parameter group among the J parameter groups comprises at least one of the number of coding layers, the size of input parameters of the coding layers, the size of output parameters of the coding layers, the threshold of the activation function, the size of the convolution kernel, the stride of the convolution kernel, or the weights between feature maps.

As one embodiment, any parameter group among the J parameter groups comprises at least one parameter in Embodiment 15.

As one embodiment, any parameter group among the J parameter groups comprises the number of coding layers and which one or ones from {the fully connected layer, the convolutional layer, the pooling layer} are comprised.

As one embodiment, any parameter group among the J parameter groups comprises at least one of the number of coding layers, the size of input parameters of the coding layers, or the size of output parameters of the coding layers.

As one embodiment, any parameter group among the J parameter groups comprises at least one of the number of coding layers, the size of input parameters of the coding layers, the size of output parameters of the coding layers, the threshold of the activation function, the size of the convolution kernel, the stride of the convolution kernel, or the weights between feature maps.

As one embodiment, the parameter group which is used by the first decode comprises at least one parameter in a first function in the present application.

As one embodiment, the parameter group which is used by the first decode comprises at least one of the number of decoding layer groups, the number of decoding layers, the size of input parameters of the decoding layers, or the size of output parameters of the decoding layers.

As one embodiment, the parameter group which is used by the first decode comprises at least one of the number of decoding layer groups, the number of decoding layers, the size of input parameters of the decoding layers, the size of output parameters of the decoding layers, the threshold of the activation function, the size of the convolution kernel, the stride of the convolution kernel, or the weights between feature maps.

As one embodiment, any parameter group among the P parameter groups comprises at least one parameter in the first function in the present application.

As one embodiment, any parameter group among the P parameter groups comprises at least one of the number of decoding layer groups, the number of decoding layers, the size of input parameters of the decoding layers, or the size of output parameters of the decoding layers.

As one embodiment, any parameter group among the P parameter groups comprises at least one of the number of decoding layer groups, the number of decoding layers, the size of input parameters of the decoding layers, the size of output parameters of the decoding layers, the threshold of the activation function, the size of the convolution kernel, the stride of the convolution kernel, or the weights between feature maps.

As one embodiment, the parameter group which is used by the first decode is obtained by training.

As one embodiment, the parameter group which is used by the first decode comprises one parameter or a plurality of parameters.

As one embodiment, the parameter group which is used by the first decode is used for describing the first decode.

As one embodiment, the parameter group which is used by the first decode is used for describing the model which is used by the first decode.

As one embodiment, the parameter group which is used by the first decode comprises the model which is used by the first decode.

As one embodiment, the parameter group which is used by the first decode is the model which is used by the first decode.

As one embodiment, the model which is used by the first decode is one CSI reconstruction model.

As one embodiment, any parameter group among the J parameter groups corresponds to one parameter group among the P parameter groups.

As one embodiment, J is equal to P, and the J parameter groups correspond one-to-one with the P parameter groups.

As one embodiment, the meaning of "one parameter group among the J parameter groups corresponds to one parameter group among the P parameter groups" comprises: one parameter group among the P parameter groups is used for the inverse operation of one corresponding parameter group among the J parameter groups.

As one embodiment, the meaning of "one parameter group among the J parameter groups corresponds to one parameter group among the P parameter groups" comprises: one parameter group among the P parameter groups and one parameter group among the J parameter groups that corresponding to it are obtained by training based on the same training dataset.

As one embodiment, when the first code uses a first parameter group among the J parameter groups to generate the first channel information, the first decode uses one parameter group among the P parameter groups that corresponds to the first parameter group to generate the first reconstruction channel information; and the first parameter group is one of the J parameter groups.

As one embodiment, the parameter group which is used by the first code corresponds to the parameter group which is used by the first decode.

As one embodiment, the parameter group which is used in the first decode depends on the parameter group which is used by the first code.

As one embodiment, the first decode uses one parameter group among the P parameter groups that corresponds to the parameter group which is used by the first code to generate the first reconstruction channel information.

As one embodiment, P is greater than 1, and two parameter groups among the J parameter groups respectively correspond to two parameters groups among the P parameter groups.

As one embodiment, the parameter group which is used by the first code is one parameter group among the J parameter groups, J being a positive integer greater than 1; the parameter group which is used by the first decode is one parameter group among the P parameter groups, P being a positive integer; any parameter group among the J parameter groups corresponds to one parameter group among the P parameter groups; and the parameter group which is used by the first decode is one parameter group among the P parameter groups that corresponds to the parameter group which is used by the first code.

As one embodiment, training types of the J parameter groups are the same.

As one embodiment, the training type of at least one parameter group among the J parameter groups describes how the first code is trained.

As one embodiment, the training type of at least one parameter group among the J parameter groups describes how the first code and the first decode are trained.

As one embodiment, the training type of at least one parameter group among the J parameter groups is a Type 1.

As one embodiment, the training type of at least one parameter group among the J parameter groups is a Type 2.

As one embodiment, the training type of at least one parameter group among the J parameter groups is a Type 3.

As one embodiment, the training type of at least one parameter group among the J parameter groups is one type in a first-type set.

As one embodiment, the first-type set comprises a plurality of training types.

As one embodiment, the first-type set comprises at least one of the Type 1, the Type 2, or the Type 3.

As one embodiment, the first-type set comprises at least two of the Type 1, the Type 2, or the Type 3.

As one embodiment, the first-type set comprises the Type 1, the Type 2, and the Type 3.

As one embodiment, the first-type set comprises the Type 1 and the Type 2.

As one embodiment, the first-type set comprises the Type 2 and the Type 3.

As one embodiment, the Type 1 comprises: the first code and the first decode are jointly trained, or generated, or maintained in only one node of the first node or the second node.

As one embodiment, the Type 2 comprises: the first code and the first decode are jointly trained, or generated, or maintained in the first node and the second node.

As one embodiment, the Type 3 comprises: the first code and the first decode are separately or independently trained, or generated, or maintained in the first node and the second node, respectively.

As one embodiment, the Type 1 comprises: the J parameter groups and the P parameter groups are jointly trained, or generated, or maintained in only one node of the first node or the second node.

As one embodiment, the Type 2 comprises: the J parameter groups and the P parameter groups are jointly trained, or generated, or maintained in the first node and the second node.

As one embodiment, the Type 3 comprises: the J parameter groups and the P parameter groups are separately or independently trained, or generated, or maintained in the first node and the second node, respectively.

### Embodiment 14

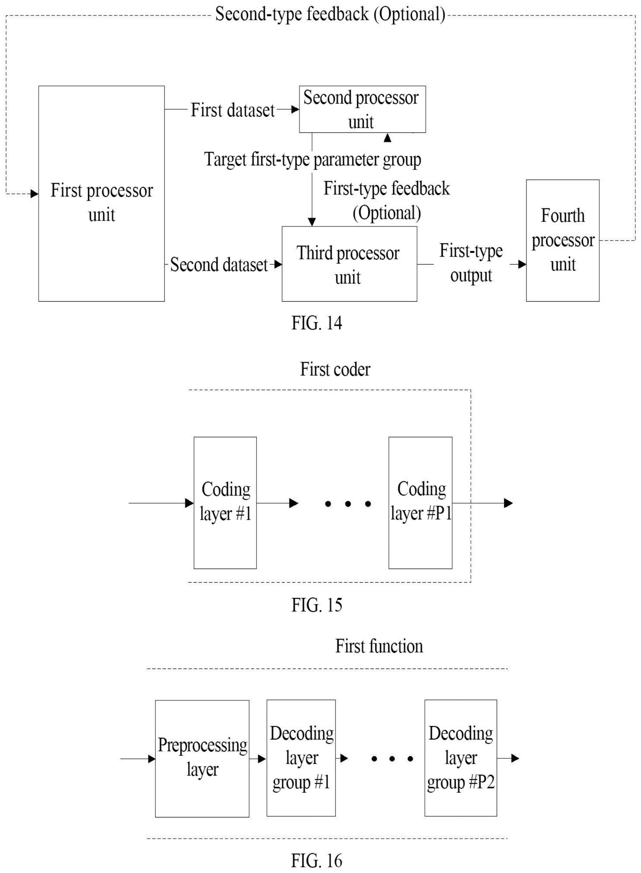

Embodiment 14 illustrates a schematic diagram of an artificial intelligence processing system according to one embodiment of the present application, as shown in FIG. 14. FIG. 14 comprises a first processor unit, a second processor unit, a third processor unit, and a fourth processor unit.

In Embodiment 14, the first processor unit sends a first dataset to the second processor unit, the second processor unit generates a target first-type parameter group according to the first dataset, the second processor unit sends the generated target first-type parameter group to the third processor unit, and the third processor unit processes a second dataset using the target first-type parameter group to obtain a first-type output, and then sends the first-type output to the fourth processor unit.

As one embodiment, the third processor unit sends a first-type feedback to the second processor unit, and the first-type feedback is used for triggering recalculation or updating of the target first-type parameter group.

As one embodiment, the fourth processor unit sends a second-type feedback to the first processor unit, and the second-type feedback is used for generating the first dataset or the second dataset, or the second-type feedback is used for triggering sending of the first dataset or the second dataset.

As one embodiment, the first dataset is a training dataset, the second dataset is inference data, and the second processor unit is used for training a model.

As one embodiment, the trained model is described by the target first-type parameter group.

As one embodiment, the target first-type parameter group comprises the trained model.

As one embodiment, the target first-type parameter group is the trained model.

As one embodiment, the third processor unit constructs a model according to the target first-type parameter group, then inputs the second dataset into the constructed model to obtain the first-type output, and then sends the first-type output to the fourth processor unit.

As one embodiment, the third processor unit calculates an error between the first-type output and actual data to determine the performance of the trained model; and the actual data is data transmitted by the first processor unit received after the second dataset.

The above embodiments are particularly suitable for prediction-related reports.

As one embodiment, the third processor unit recovers a reference dataset according to the first-type output, and the error between the reference dataset and the second dataset is used for generating the first-type feedback.

As one embodiment, the reference dataset is recovered typically using an inverse operation similar to the target first-type parameter group.

As one embodiment, the first-type feedback is used for reflecting the performance of the trained model; and when the performance of the trained model fails to meet requirements, the second processor unit recalculates the target first-type parameter group.

Typically, the performance of the trained model is considered to fail to meet requirements when the error is excessively large or has not been updated for a long time.

As one embodiment, the first dataset comprises at least one of the J1 training datasets in the present application.

As one embodiment, the first dataset is one training dataset among the J1 training datasets in the present application.

As one embodiment, the first dataset is the J1 training datasets in the present application.

As one embodiment, the second dataset comprises first input channel information in the present application.

As one embodiment, the first processor unit generates the first dataset according to a measurement on a first wireless signal, the first wireless signal comprising a downlink RS.

As one embodiment, the first processor unit generates the second dataset according to the measurement on a second wireless signal, the second wireless signal comprising at least one RS resource in a first RS resource set in the present application.

As one embodiment, the third processor unit comprises a first code of the present application, and the generation of the first-type output is performed by the first code.

As one embodiment, the target first-type parameter group is a parameter group which is used by the first code in the present application.

As one embodiment, the target first-type parameter group is one of the J parameter groups in the present application.

As one embodiment, the third processor unit comprises a first reference decode in the present application, an input of the first reference decode comprising the first-type output, an output of the first reference decode comprising a reference dataset, and the reference dataset comprising a first monitoring output in the present application.

As one embodiment, the fourth processor unit comprises a first decode of the present application, the input of the first decode comprising the first-type output, or the first-type output being used for generating the input of the first decode.

As one embodiment, the second-type feedback comprises the output of the first decode in the present application.

As one embodiment, the output of the first decode in the present application is used for generating the second-type feedback.

As one embodiment, the second-type feedback comprises first reconstruction channel information in the present application.

As one embodiment, the first reconstruction channel information in the present application is used for generating the second-type feedback.

As one embodiment, the fourth processor unit comprises a first reference code in the present application.

As one embodiment, the second-type feedback comprises a second monitoring output in the present application.

As one embodiment, the second monitoring output in the present application is used for generating the second-type feedback.

As one embodiment, the first-type output comprises first channel information in the present application.

As one embodiment, the first processor unit belongs to a first node.

As one embodiment, the third processor unit belongs to the first node.

As one embodiment, the fourth processor unit belongs to a second node.

As one embodiment, the second processor unit belongs to the first node.

The above embodiments avoid transmitting the first dataset to the second node.

As one embodiment, the second processor unit belongs to the second node.

The above embodiments reduce the complexity of the first node.

As one embodiment, the third processor unit belongs to the second node, and the first node reports the target first-type parameter group to the second node.

As one embodiment, the first processor unit belongs to a first receiver in the present application.

As one embodiment, the second processor unit belongs to the first receiver in the present application.

As one embodiment, the second processor unit belongs to a first transmitter in the present application.

As one embodiment, the second processor unit belongs to at least one of the first receiver or the first transmitter in the present application.

As one embodiment, the second processor unit belongs to a second receiver in the present application.

As one embodiment, the second processor unit belongs to a second transmitter in the present application.

As one embodiment, the second processor unit belongs to at least one of the second receiver or the second transmitter in the present application.

As one embodiment, the third processor unit belongs to the first receiver in the present application.

As one embodiment, the third processor unit belongs to the first transmitter in the present application.

As one embodiment, the third processor unit belongs to at least one of the first receiver or the first transmitter in the present application.

As one embodiment, the fourth processor unit belongs to the second receiver in the present application.

As one embodiment, the fourth processor unit belongs to the second transmitter in the present application.

As one embodiment, the fourth processor unit belongs to at least one of the second receiver or the second transmitter in the present application.

### Embodiment 15

Embodiment 15 illustrates a schematic diagram of one code according to one embodiment of the present application, as shown in FIG. 15. In FIG. 15, one code comprises P1 coding layers, namely, coding layers #1, #2, ..., #P1.

As one embodiment, the one code is a first code of the present application.

As one embodiment, the one code is a first reference code of the present application.

As one embodiment, P1 is equal to 1.

As one embodiment, P1 is greater than 1.

As one embodiment, the P1 coding layers comprise at least one of a fully connected layer, a convolutional layer, and a pooling layer.

As one embodiment, P1 is 2, namely the P1 coding layers comprise a coding layer #1 and a coding layer #2, the coding layer #1 and the coding layer #2 being respectively the convolutional layer and the fully connected layer; in the convolutional layer, at least one convolution kernel is used for convolving first input channel information to generate a corresponding feature map. The at least one feature map output by the convolutional layer is reshaped into one vector to be input into the fully connected layer; and the fully connected layer converts the one vector into first channel information in the present application. For a more detailed description, please refer to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018.

As one embodiment, P1 is 3, namely the P1 coding layers comprise the fully connected layer, the convolutional layer, and the pooling layer.

### Embodiment 16

Embodiment 16 illustrates a schematic diagram of a first function according to one embodiment of the present application, as shown in FIG. 16. In FIG. 16, the first function comprises a preprocessing layer and P2 decoding layer groups, namely, decoding layer groups #1, #2, ..., #P2, each decoding layer group comprising at least one decoding layer, wherein the preprocessing layer is optional.

As one embodiment, a structure of the first function is applicable to a first decode in the present application.

As one embodiment, the structure of the first function is applicable to a first reference decode in the present application.

As one embodiment, the preprocessing layer is one fully connected layer that upscales a size of first channel information to a size of first input channel information.

As one embodiment, any two decoding layer groups among the P2 decoding layer groups have the same structure, comprising the number of decoding layers comprised, the size of input parameters and the size of output parameters of each decoding layer comprised, etc.

As one embodiment, a first node indicates the structure of P2 and the decoding layer group to a second node.

As one embodiment, the second node indicates the structure of P2 and the decoding layer group to the first node.

As one embodiment, the first node indicates other parameters of the first function toward the second node.

As one embodiment, the second node indicates other parameters of the first function toward the first node.

As one embodiment, the other parameters comprise at least one of a threshold of an activation function, the size of a convolution kernel, a stride of the convolution kernel, and weights between feature maps.

### Embodiment 17

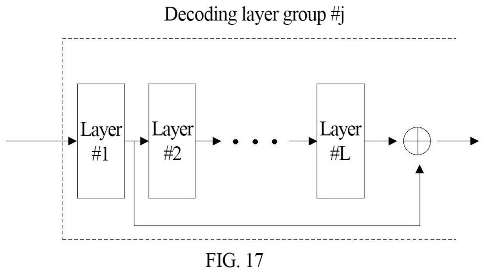

Embodiment 17 illustrates a schematic diagram of one decoding layer group according to one embodiment of the present application, as shown in FIG. 17. In FIG. 17, the decoding layer group #j comprises L layers, namely, Layers #1, #2, ..., #L; and the decoding layer group is any one decoding layer group among the P2 decoding layer groups.

As one embodiment, L is 4, a first layer of the L layers is an input layer, and the last three layers of the L layers are convolutional layers. For a more detailed description, please refer to CNN-related technical literatures, such as Chao-Kai Wen, Deep Learning for Massive MIMO CSI Feedback, IEEE WIRELESS COMMUNICATIONS LETTERS, VOL. 7, NO. 5, OCTOBER 2018.

As one embodiment, the L layers comprise at least one convolutional layer and one pooling layer.

### Embodiment 18

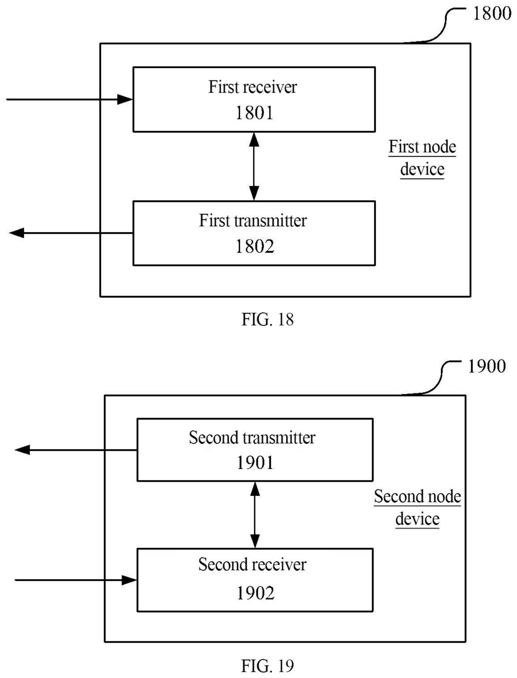

Embodiment 18 illustrates a structural block diagram of a processing apparatus used in a first node device according to one embodiment of the present application, as shown in FIG. 18. In FIG. 18, a processing apparatus 1800 in the first node device comprises a first receiver 1801 and a first transmitter 1802.

As one embodiment, the first node device is user equipment.

As one embodiment, the first receiver 1801 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1802 comprises at least one of {the antenna 452, a transmitting device 454, a transmitting processor 468, a multi-antenna transmitting processor 457, the controller/processor 459, the memory 460, and the data source 467} in Embodiment 4.

The first receiver 1801 receives a first information block, wherein the first information block is used for indicating a first RS resource set, and the first RS resource set comprises one or more RS resources.

The first transmitter 1802 sends first channel information.

In Embodiment 18, a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, it comprises:
the first receiver 1801 receiving the first indication;
or the first transmitter 1802 sending the first indication.

As one embodiment, the first parameter set is obtained by training based on a first group of training datasets, and the second parameter set is obtained by training based on a second group of training datasets; the first group of training datasets comprises one or more training datasets, and the second group of training datasets comprises one or more training datasets.

As one embodiment, whether the target parameter set is the first parameter set or the second parameter set depends on the first RS resource set.

As one embodiment, the first information block corresponds to a first CORESET pool or a second CORESET pool, and whether the target parameter set is the first parameter set or the second parameter set depends on whether the first information block corresponds to the first CORESET pool or the second CORESET pool.

As one embodiment, it comprises:
the first receiver 1801 receiving a first signaling, the first signaling being used for triggering the first channel information,
wherein a CORESET where a PDCCH occupied by the first signaling is located belongs to the first CORESET pool or the second CORESET pool; and whether the target parameter set is the first parameter set or the second parameter set depends on whether the CORESET where the PDCCH occupied by the first signaling is located belongs to the first CORESET pool or the second CORESET pool.

As one embodiment, it comprises:
the first receiver 1801 receiving a third information block,
wherein the third information block is used for indicating whether the target parameter set is the first parameter set or the second parameter set.

As one embodiment, the training of at least one parameter group in the first parameter set and the second parameter set is performed at a first node, or the training of at least one parameter group in the first parameter set and the second parameter set is performed by a sender of the first information block.

### Embodiment 19

Embodiment 19 illustrates a structural block diagram of a processing apparatus used in a second node device according to one embodiment of the present application, as shown in FIG. 19. In FIG. 19, a processing apparatus 1900 in the second node device comprises a second transmitter 1901 and a second receiver 1902.

As one embodiment, the second node device is a base station device.

As one embodiment, the second transmitter 1901 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1902 comprises at least one of {the antenna 420, a receiving device 418, a receiving processor 470, a multi-antenna receiving processor 472, the controller/processor 475, and the memory 476} in Embodiment 4.

The second transmitter 1901 sends a first information block, the first information block being used for indicating a first RS resource set, and the first RS resource set comprising one or more RS resources.

The second receiver 1902 receives first channel information.

In Embodiment 19, a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

As one embodiment, it comprises:
the second transmitter 1901 sending the first indication;
or the second receiver 1901 receiving the first indication.

As one embodiment, the first parameter set is obtained by training based on a first group of training datasets, and the second parameter set is obtained by training based on a second group of training datasets; the first group of training datasets comprises one or more training datasets, and the second group of training datasets comprises one or more training datasets.

As one embodiment, whether the target parameter set is the first parameter set or the second parameter set depends on the first RS resource set.

As one embodiment, the first information block corresponds to a first CORESET pool or a second CORESET pool, and whether the target parameter set is the first parameter set or the second parameter set depends on whether the first information block corresponds to the first CORESET pool or the second CORESET pool.

As one embodiment, it comprises:
the second transmitter 1901 sending a first signaling, the first signaling being used for triggering the first channel information,
wherein a CORESET where a PDCCH occupied by the first signaling is located belongs to the first CORESET pool or the second CORESET pool; and whether the target parameter set is the first parameter set or the second parameter set depends on whether the CORESET where the PDCCH occupied by the first signaling is located belongs to the first CORESET pool or the second CORESET pool.

As one embodiment, it comprises:
the second transmitter 1901 sending a third information block,
wherein the third information block is used for indicating whether the target parameter set is the first parameter set or the second parameter set.

As one embodiment, the training of at least one parameter group in the first parameter set and the second parameter set is performed by a recipient of the first information block, or the training of at least one parameter group in the first parameter set and the second parameter set is performed at a second node.

Those of ordinary skill in the art can understand that all or part of the steps in the above methods may be completed by instructing relevant hardware through a program, and the program may be stored in a computer-readable storage medium, such as a read-only memory, a hard disk or an optical disk. Optionally, all or part of the steps in the above embodiments may also be implemented using one or a plurality of integrated circuits. Accordingly, each module unit in the above embodiments may be implemented in the form of hardware or in the form of a software function module, and the present application is not limited to any specific form of software and hardware combination. The user equipment, terminals, and UE of the present application include, but are not limited to drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. Base stations or system devices in the present application include, but are not limited to, MacroCellular base stations, MicroCellular base stations, Femtocells, relay base stations, gNBs (NR nodes B), TRPs (Transmitter Receiver Points), and other wireless communication devices.

The above are only preferred embodiments of the present application and are not used for limiting the scope of protection of the present application. Any change and modification made based on the embodiments described in the specification, if similar technical effects in part or in whole can be obtained, should be deemed obvious and fall within the protection scope of the present invention.

## Claims

1. A first node device for wireless communications, comprising:
a first receiver receiving a first information block, the first information block being used for indicating a first RS resource set, and the first RS resource set comprising one or more RS resources; and
a first transmitter sending first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

2. The first node device according to claim 1, comprising:
the first receiver receiving the first indication;
or the first transmitter sending the first indication.

3. The first node device according to claim 1 or 2, wherein the first parameter set is obtained by training based on a first group of training datasets, and the second parameter set is obtained by training based on a second group of training datasets; and the first group of training datasets comprises one or more training datasets, and the second group of training datasets comprises one or more training datasets.

4. The first node device according to any one of claims 1 to 3, wherein whether the target parameter set is the first parameter set or the second parameter set depends on the first RS resource set.

5. The first node device according to any one of claims 1 to 3, wherein the first information block corresponds to a first CORESET pool or a second CORESET pool, and whether the target parameter set is the first parameter set or the second parameter set depends on whether the first information block corresponds to the first CORESET pool or the second CORESET pool.

6. The first node device according to any one of claims 1 to 3, comprising:
the first receiver receiving a first signaling, the first signaling being used for triggering the first channel information,
wherein a CORESET where a PDCCH occupied by the first signaling is located belongs to a first CORESET pool or a second CORESET pool; and whether the target parameter set is the first parameter set or the second parameter set depends on whether the CORESET where the PDCCH occupied by the first signaling is located belongs to the first CORESET pool or the second CORESET pool.

7. The first node device according to any one of claims 1 to 3, comprising:
the first receiver receiving a third information block,
wherein the third information block is used for indicating whether the target parameter set is the first parameter set or the second parameter set.

8. The first node device according to any one of claims 1 to 7, wherein the training of at least one parameter group in the first parameter set and the second parameter set is performed at a first node, or the training of at least one parameter group in the first parameter set and the second parameter set is performed by a sender of the first information block.

9. A second node device for wireless communications, comprising:
a second transmitter sending a first information block, the first information block being used for indicating a first RS resource set, and the first RS resource set comprising one or more RS resources; and
a second receiver receiving first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

10. The second node device according to claim 9, wherein
the first indication is sent; or
the first indication is received.

11. The second node device according to claim 9 or 10, wherein
the first parameter set is obtained by training based on a first group of training datasets, and the second parameter set is obtained by training based on a second group of training datasets; and the first group of training datasets comprises one or more training datasets, and the second group of training datasets comprises one or more training datasets.

12. The second node device according to any one of claims 9 to 11, wherein
whether the target parameter set is the first parameter set or the second parameter set depends on the first RS resource set.

13. The second node device according to any one of claims 9 to 11, wherein
the first information block corresponds to a first CORESET pool or a second CORESET pool, and whether the target parameter set is the first parameter set or the second parameter set depends on whether the first information block corresponds to the first CORESET pool or the second CORESET pool.

14. The second node device according to any one of claims 9 to 11, wherein
a first signaling is sent, the first signaling being used for triggering the first channel information,
wherein a CORESET where a PDCCH occupied by the first signaling is located belongs to a first CORESET pool or a second CORESET pool; and whether the target parameter set is the first parameter set or the second parameter set depends on whether the CORESET where the PDCCH occupied by the first signaling is located belongs to the first CORESET pool or the second CORESET pool.

15. The second node device according to any one of claims 9 to 11, wherein
a third information block is sent,
wherein the third information block is used for indicating whether the target parameter set is the first parameter set or the second parameter set.

16. The second node device according to any one of claims 9 to 15, wherein
the training of at least one parameter group in the first parameter set and the second parameter set is performed by a recipient of the first information block; or the training of at least one parameter group in the first parameter set and the second parameter set is performed at a second node.

17. A method used in a first node device for wireless communications, comprising:
receiving a first information block, the first information block being used for indicating a first RS resource set, and the first RS resource set comprising one or more RS resources; and
sending first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

18. The method used in a first node device according to claim 17, wherein
the first indication is received; or
the first indication is sent.

19. The method used in a first node device according to claim 17 or 18, wherein
the first parameter set is obtained by training based on a first group of training datasets, and the second parameter set is obtained by training based on a second group of training datasets; and the first group of training datasets comprises one or more training datasets, and the second group of training datasets comprises one or more training datasets.

20. The method used in a first node device according to any one of claims 17 to 19, wherein
whether the target parameter set is the first parameter set or the second parameter set depends on the first RS resource set.

21. The method used in a first node device according to any one of claims 17 to 19, wherein
the first information block corresponds to a first CORESET pool or a second CORESET pool, and whether the target parameter set is the first parameter set or the second parameter set depends on whether the first information block corresponds to the first CORESET pool or the second CORESET pool.

22. The method used in a first node device according to any one of claims 17 to 19, wherein
a first signaling is received, the first signaling being used for triggering the first channel information,
wherein a CORESET where a PDCCH occupied by the first signaling is located belongs to a first CORESET pool or a second CORESET pool; and whether the target parameter set is the first parameter set or the second parameter set depends on whether the CORESET where the PDCCH occupied by the first signaling is located belongs to the first CORESET pool or the second CORESET pool.

23. The method used in a first node device according to any one of claims 17 to 19, wherein
a third information block is received,
wherein the third information block is used for indicating whether the target parameter set is the first parameter set or the second parameter set.

24. The method used in a first node device according to any one of claims 17 to 23, wherein
the training of at least one parameter group in the first parameter set and the second parameter set is performed at a first node; or
the training of at least one parameter group in the first parameter set and the second parameter set is performed by a sender of the first information block.

25. A method used in a second node device for wireless communications, comprising:
sending a first information block, the first information block being used for indicating a first RS resource set, and the first RS resource set comprising one or more RS resources; and
receiving first channel information,
wherein a first code is used for generating the first channel information, and a measurement for at least one RS resource in the first RS resource set is used for generating an input of the first code; a parameter group which is used by the first code belongs to a first parameter set or a second parameter set, the first parameter set comprises one or more parameter groups, the second parameter set comprises one or more parameter groups, the first parameter set is obtained by training, and the second parameter set is obtained by training; and a first indication is used for indicating, from only a target parameter set of the first parameter set and the second parameter set, the parameter group which is used by the first code, and the target parameter set is the first parameter set or the second parameter set.

26. The method used in a second node device according to claim 25, wherein
the first indication is sent; or
the first indication is received.

27. The method used in a second node device according to claim 25 or 26, wherein
the first parameter set is obtained by training based on a first group of training datasets, and the second parameter set is obtained by training based on a second group of training datasets; and the first group of training datasets comprises one or more training datasets, and the second group of training datasets comprises one or more training datasets.

28. The method used in a second node device according to any one of claims 25 to 27, wherein
whether the target parameter set is the first parameter set or the second parameter set depends on the first RS resource set.

29. The method used in a second node device according to any one of claims 25 to 27, wherein
the first information block corresponds to a first CORESET pool or a second CORESET pool, and whether the target parameter set is the first parameter set or the second parameter set depends on whether the first information block corresponds to the first CORESET pool or the second CORESET pool.

30. The method used in a second node device according to any one of claims 25 to 27, wherein
a first signaling is sent, the first signaling being used for triggering the first channel information,
wherein a CORESET where a PDCCH occupied by the first signaling is located belongs to a first CORESET pool or a second CORESET pool; and whether the target parameter set is the first parameter set or the second parameter set depends on whether the CORESET where the PDCCH occupied by the first signaling is located belongs to the first CORESET pool or the second CORESET pool.

31. The method used in a second node device according to any one of claims 25 to 27, wherein
a third information block is sent,
wherein the third information block is used for indicating whether the target parameter set is the first parameter set or the second parameter set.

32. The method used in a second node device according to any one of claims 25 to 31, wherein
the training of at least one parameter group in the first parameter set and the second parameter set is performed by a recipient of the first information block; or the training of at least one parameter group in the first parameter set and the second parameter set is performed at a second node.
